# EUROPÄISCHE PATENTSCHRIFT

(11) **EP 0 260 561 B1**
(45) Veröffentlichungstag und Bekanntmachung des Hinweises auf die Patenterteilung: **17.03.1993**
(21) Anmeldenummer: 87113031.6
(22) Anmeldetag: 07.09.1987
(51) Int. Cl.: C09B 67/22, C09B 45/14, C09B 56/02, D06P 3/32

(54) **Verfahren zum Färben von Leder mit Farbstoffmischungen**
Process for dyeing leather with dyestuff mixtures
Procédé de teinture du cuir avec des mélanges de colorants

(30) Priorität: 18.09.1986 DE 3631754
(43) Veröffentlichungstag der Anmeldung: 23.03.1988
(73) Patentinhaber: BAYER AG, 51368 Leverkusen (DE)
(72) Erfinder: Mennicke, Winfried, Dr., D-5090 Leverkusen 1 (DE)

(56) Entgegenhaltungen:
- EP-A- 0 061 998
- EP-A- 0 061 999
- EP-A- 0 110 822
- CHEMICAL ABSTRACTS, Band 84, Nr. 16, 19. April 1976, Seite 77, Zusammenfassung Nr. 107058m, Columbus, Ohio, US; & DD-A-111 090 (W. HEPP et al.) 20-01-1975
- CHEMICAL ABSTRACTS, Band 104, Nr. 10, März 1986, Seite 103, Zusammungfassung Nr. 70664j, Columbus, Ohio, US; & PL-A-124 569 (OSRODEK BADAWCZO-ROZWOJOWY PRZEMYSLU BARWNIKOW "ORGANIKA") 15-04-1985

## Beschreibung

Die vorliegende Erfindung betrifft ein Verfahren zum Färben von Leder mit Mischungen aus mindestens zwei, vorzugsweise drei Farbstoffen unterschiedlicher Grundfarbe, welches das Trichromie-Verfahren ermöglicht, d.h. das Färben mit einer Mischung aus gelben, roten und blauen Farbstoffen. Unter gelben Farbstoffen sind alle Farbstoffe mit gelber Nuance zu verstehen, z.B. gelbbraune oder auch rotstichig oder grünstichig gelbe Farbstoffe. Die orangefarbenen bis rotbraunen Farbstoffe werden insgesamt als rote Farbstoffe bezeichnet, die blauen, grauen oder violetten als blaue Farbstoffe.

Voraussetzung für das gemeinsame Färben von zwei oder drei Farbstoffen ist, daß diese Farbstoffe miteinander kombinierbar sind. An zu kombinierende Lederfarbstoffe werden dabei sehr hohe Anforderungen gestellt, besonders wenn sie das gesamte Spektrum der Grundfarben überstreichen. Das Substrat Leder ist nämlich ein komplexes Material mit unterschiedlicher Affinität gegenüber Farbstoffen und mit unterschiedlicher Durchlässigkeit der Farbstoffe in das Lederinnere.

In der EP-A 0 110 822 wird die Verwendung bestimmter 1:2- Chromkomplexfarbstoffe sowie weiterhin die Verwendung von Mischungen dieser Chromkomplexfarbstoffe mit einem oder mehreren geeigneten gelben, blauen oder roten Farbstoffen zum Färben von Pelzen und Leder beschrieben.

Die Aufgabe Leder mit Mischungen von Farbstoffen unterschiedlicher Farbe zu färben, wird überraschenderweise durch Verwendung von solchen Farbstoffmischungen erfüllt, bei denen jede der Kombinationsfarben ein Gemisch von Farbstoffen der allgemeinen Formeln (I), (II) und (III) darstellt: 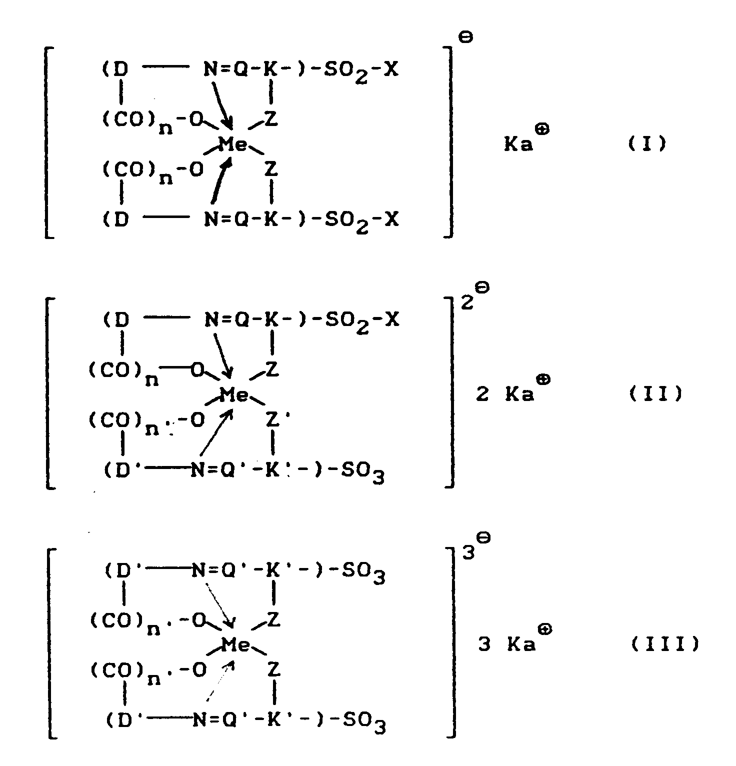
worin
- SO₂-X: an den Resten D oder K und
- SO₃: an den Resten Dʹ oder Kʹ gebunden ist,
- D, Dʹ: den Rest einer Diazokomponente der Benzol- und Naphthalinreihe mit zur Azo- bzw. Azomethingruppe o-ständiger Hydroxy- oder Carboxygruppe,
- Q, Qʹ: Stickstoff oder CH,
- K, Kʹ: den Rest einer carbocyclischen oder heterocyclischen Kupplungskomponente, wenn Q Stickstoff ist, wobei die metallbindende Gruppe Z in o-Stellung zur Azogruppe steht, oder, falls Q die CH-Gruppe ist, den Rest eines o-Hydroxyaldehyds,
- Z, Zʹ: Sauerstoff, NH oder N-Alkyl und
- n, nʹ: 0 oder 1 bedeuten,
- X: für NH₂, durch Alkyl, Cycloalkyl, Aralkyl oder Aryl mono- oder disubstituiertes NH₂, Aryloxy oder Alkyl,
- Me: für Chrom oder Kobalt und
- Ka^{⊕}: für ein Kation steht und
die Reste D, Dʹ, K, Kʹ und Z und Zʹ gleich oder verschieden sein können.

D, Dʹ, K und Kʹ können übliche Substituenten aufweisen.

Geeignete Substituenten an den Resten D, Dʹ und K, Kʹ sind neben SO₃ bzw. SO₂X beispielsweise Sulfoamoyl, COOH, Carboamoyl, Acylamino, Alkylsulfonyl, Arylsulfonyl, Alkyl, Alkoxy, NO₂, NH₂, mono- oder dialkylsubstituiertes NH₂, OH, Cl Br, CN, CF₃ oder Arylazo.

Bevorzugte Alkyl- oder Alkoxygruppen sind solche mit 1 bis 4 C-Atomen, die gegebenenfalls weiter substituiert sein können, beispielsweise durch CN, Cl, OH, C₁-C₄-Alkoxy oder Phenyl. Besonders bevorzugt sind Methyl oder Methoxy.

Bevorzugte Cycloalkylgruppen sind Cyclohexyl oder Methylcyclohexyl, während als Aralkylgruppen vorzugsweise Benzyl oder Phenethyl infrage kommen.

Acylamino steht vorzugsweise für C₁-C₄-Alkylcarbonylamino, C₁-C₄-Alkoxycarbonylamino, C₁-C₄-Alkylsulfonylamino, Arylcarbonylamino oder Arylsulfonylamino.

Die Sulfamoyl- oder Carbamoylgruppen können mono- oder disubstituiert sein, beispielsweise durch gegebenenfalls substituiertes C₁-C₄-Alkyl oder durch Aryl.

Bevorzugte Arylreste sind insbesondere gegebenenfalls substituierte Phenylreste mit Substituenten wie Cl, NO₂, C₁-C₄-Alkyl, C₁-C₄-Alkoxy oder SO₃H.

Die Reste K, Kʹ leiten sich, falls Q für Stickstoff steht, vorzugsweise von Resorcin, m-Phenylendiamin, m-Aminophenol, N- mono- oder -dialkylsubstituierten m-Aminophenolen, von in o-Stellung kuppelnden Phenolen oder von Kupplungskomponenten der 1-Naphthol-, 2-Naphthol-, 1-Naphthylamin-, 2-Naphthylamin-, 5-Pyrazolon-, 5-Aminopyrazol-, Acetessigsäureamid-, Acetonylbenzthiazol-, 6-Hydroxypyridon- oder 4-Hydroxychinolon-Reihe ab.

Das durch Ka^{⊕} dargestellte Kation ist vorzugsweise ein Alkaliion, insbesondere ein Lithium-, Natrium- oder Kaliumkation, ein Ammoniumion oder das Kation eines organischen Amins, insbesondere eines Mono-, Di- oder Tri-alkylamins, dessen Alkylgruppe 1 bis 4 C-Atome aufweist und beispielsweise durch OH substituiert sein kann, bzw. einer entsprechenden quartären Base.

Bevorzugte Kombinationsfarbstoffe stellen jeweils Gemische dar von in der Nuance eng beieinanderliegenden 1:2-Metallkomplexfarbstoffen der Formel (IV), (V) und (VI): 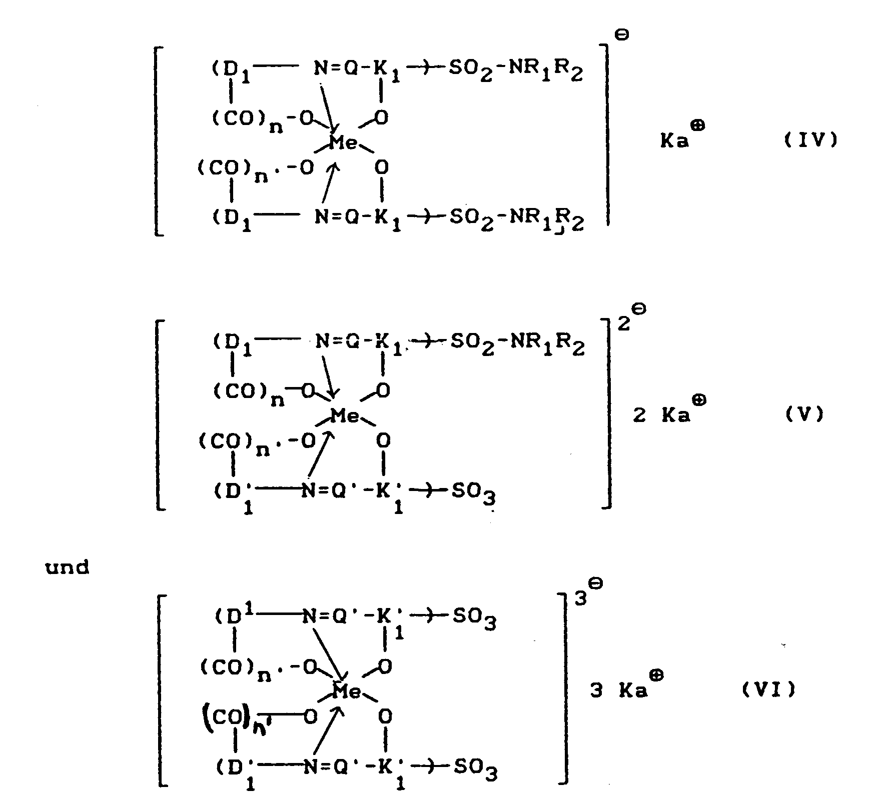
worin
- R₁: H oder Alkyl und
- R₂: H, Alkyl oder Aryl bedeutet, und
- D₁, D₁': Rest eines gegebenenfalls durch SO₃ bzw. SO₂-NR₁R₂, Cl, NO₂ und CH₃ unabhängig ein- oder zweimal substituierten 2-Amino-1-hydroxybenzols oder 1-Amino-2-naphthols oder einer gegebenenfalls durch SO₃ bzw. SO₂-NR₁R₂, NO₂, Cl oder zwei Cl substituierten 2-Aminobenzoesäure und
- K₁, K₁ʹ: falls Q für Stickstoff steht, Rest des Resorcins, m-Phenylendiamins, m-Aminophenols, eines N-mono- oder -dialkylsubstituierten m-Aminophenols oder einer gegebenenfalls durch SO₃ bzw. SO₂-NR₁R₂ substituierten Kupplungskomponente der 1-Naphthol-, 2-Naphthol-, 1-Phenyl-3-methyl-5-pyrazolon- oder Acetessigsäureanilid-Reihe, wobei die Phenylgruppe der 1-Phenylpyrazolone und Acetessigsäureanilide vorzugsweise durch C₁-C₄-Alkyl, C₁-C₄-Alkoxy und Cl unabhängig voneinander ein-oder zweimal substituiert sein kann, oder, falls Q für CH steht, Rest eines 2-Hydroxybenzaldehyds oder arylazosubstituierten 2-Hydroxybenzaldehyds, wobei die Arylgruppe vorzugsweise eine gegebenenfalls durch SO₃ bzw. SO₂-NR₁R₂, Cl, NO₂ CH₃ oder OCH₃ unabhängig voneinander ein-oder zweimal substituierte Phenylgruppe darstellt.

Die Herstellung eines Gemisches von 1:2-Metallkomplexfarbstoffen der Formel (I), (II) und (III) ist in an sich bekannter Weise auf einfachem Weg möglich, indem ein Gemisch von je einem Farbstoff der Formel (VII) und (VIII) in Gegenwart von Säureakzeptoren mit metallabgehenden Mitteln behandelt wird.

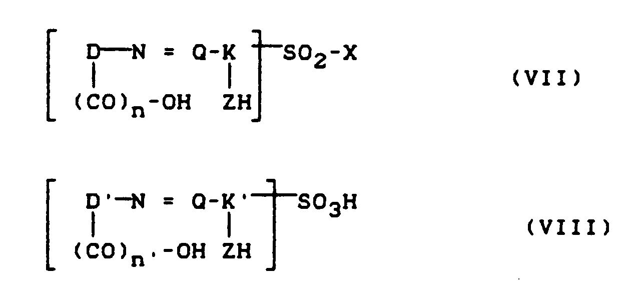

Bei dieser sogenannten Mischmetallisierung werden neben den asymmetrischen 1:2-Metallkomplexfarbstoffen der Formel (II) als Nebenprodukte zwangsläufig auch die beiden symmetrischen 1:2-Metallkomplexfarbstoffe der Formel (I) und (III) gebildet. Das molare Verhältnis der metallfreien Ausgangsfarbstoffe der Formel (VII) und (VIII) spielt bei diesem Metallisierungsverfahren keine Rolle. Für das erfindungsgemäße Färbeverfahren ist es aber besonders günstig, wenn man von stöchiometrischen Mengen (VII) und (VIII) ausgeht, oder das molare Verhältnis dieser Farbstoffe lediglich in den Grenzen von 40:60 bis 60:40 schwanken läßt.

Die Mischkobaltierung erfolgt bei Temperaturen von 20 bis 100°C, vorzugsweise bei 40 bis 80°C, und bei einem pH-Wert von 7 bis 12, vorzugsweise bei pH 10 bis 12, die Mischchromierung bei Temperaturen von 80 bis 145°C, vorzugsweise bei 100°C, und bei einem pH-Wert von 4 bis 10, vorzugsweise bei pH 6 bis 8. Als metallabgebende Mittel kommen hauptsächlich die Kobalt- und Chromsalze von anorganischen oder organischen Säuren infrage, beispielsweise Kobaltcarbonat, -chlorid, -sulfat, -acetat oder- formiat und Chromchlorid, -sulfat, -acetat, Kalium- oder Ammoniumchromsulfat, Chromsalicylsäure, ferner Chromtrioxid und Natrium- oder Kaliumchromat bzw. -bichromat. Geeignete Säureakzeptoren sind beispielsweise die Hydroxide oder Carbonate von Alkalimetallen, wie Lithium-, Natrium-. Kaliumhydroxid oder -carbonat, Ammoniak oder organische Amine, wie Mono-, Di-, Triethylamin, Mono-, Di- oder Triethanolamin, oder Tetraalkylammoniumhydroxide, wie Tetramethylammoniumhydroxid.

Am Ende Metallisierungsreaktion liegen die Farbstoffe der Formeln (I), (II) und (III) als Salze der Komplexsäure und der an ihr gebundenen SO₃H-Gruppen mit den oben erwähnten alkalisch wirkenden Mitteln vor, beispielsweise als Alkalisalze bei Verwendung von Alkalihydroxiden oder -carbonaten oder als Ammoniumsalze bei Verwendung von Ammoniak, Aminen oder Tetraalkylammoniumhydroxiden. Bevorzugt sind solche Kationen bzw. alkalisch wirkende Mittel, welche den 1:2-Metallkomplexfarbstoffen des erfindungsgemäßen Verfahrens eine gute Wasserlöslichkeit verleihen.

Die so hergestellten Gemische von Farbstoffen der Formeln (I), (II) und (III) können durch Aussalzen mit Alkalisalzen, Eindampfen auf der Walze oder Sprühtrocknung isoliert und mit den üblichen Hilfs- und Stellmitteln zu wasserlöslichen Präparationen verarbeitet werden.

Die Umsetzung von Farbstoffgemischen zu kobalt- bzw. chromhaltigen Farbstoffen der Formeln (I), (II) und (III) kann zur Beschleunigung der Reaktion auch in Gegenwart organischer Lösungsmittel durchgeführt werden. Geeignete organische Lösungsmittel sind beispielsweise niedere Alkohole, wie Ethanol, Ketone, wie Ethylmethylketon, Carbonamide, wie Formamid, Dimethylformamid, N-Methylpyrrolidon, Glykole, wie Ethylenglykol und 1,2-Propylenglykol, oder vorzugsweise deren Mono-C₁-C₄-al-kylether, wie Ethylenglykol, 1-Methoxy- oder 1-Ethoxy-2-propanol.

Die Zubereitung von flüssigen Präparationen unter Verwendung dieser organischen Lösungsmittel gegebenenfalls im Gemisch mit Wasser und gegebenenfalls unter Zusatz von Lösungsvermittlern, wie beispielsweise Harnstoff, ist ebenfalls möglich und insofern empfehlenswert, als man die Synthese der für das erfindungsgemäße Verfahren benötigten 1:2-Metallkomplexfarbstoffe oder zumindest den letzten Schritt dieser Synthese und die Herstellung der Farbstofflösungen in einem Topf ohne Zwischenisolierung vollziehen kann. Besonders vorteilhaft ist das Verfahren der DE-OS 2 443 483, bei dem man u.a. den metallfreien Farbstoff in hydroxylgruppenhaltigen Lösungsmitteln in Gegenwart von alkalisch wirkenden Lithiumsalzen metallisiert und dabei gleichzeitig lagerstabile konzentrierte Farbstofflösungen erhält. Als Lösungsmittel eignen sich für dieses Verfahren besonders 1-Methoxy- und 1-Ethoxy-2-propanol.

Die festen und flüssigen Präparationen solcher Gemische von Farbstoffen der Formeln (I), (II) und (III) eignen sich zum Färben und Bedrucken der verschiedensten Stoffe, vor allem zum Färben aus schwach alkalischem bis schwach saurem Bad, z.B. essigsaurem Bad, von natürlichen und synthetischen amidgruppenhaltigen Materialien, wie Wolle, Seide, Polyamid-, Polyurethanfaser und insbesondere Leder.

Der besondere Vorteil dieser das Farbensprektrum von gelb bis grünstichig blau umfassenden Gemische von Farbstoffen der Formeln (I), (II) und (III) ist die Kombinierbarkeit verschiedener Gemische beim Färben auf Leder. Auch aus zwei oder drei Grundfarben zusammengesetzte Nuancen fallen beim Färben auf verschiedenen Ledersorten und unter verschiedenen Bedingungen nicht oder kaum merklich auseinander. Die Gemische von in der Nuance eng beieinander liegender Farbstoffe der Formeln (I), (II) und (III) eignen sich somit zum Trichromie-Färben von Leder, wobei als Leder verschiedene Materialien, wie Chromleder, mit vegetabilischen oder synthetischen Gerbstoffen nachgegerbte Leder, Verloursleder oder Pelze, und als Färbeverfahren die Faßfärbung, Spritzfärbung oder Färbung auf der Walzenauftrags- oder MULTIMA®-Färbemaschine infrage kommen.

Die Ausgangsfarbstoffe (VII) und (VIII) werden zweckmäßigerweise so gewählt, daß sich der Farbton der Farbstoffe (I), (II) und (III) im Rahmen einer Grundfarbe nur wenig unterscheidet.

Geeignete Farbstoffgemische in der Grundfarbe gelb setzen sich beispielsweise aus den 1:2-Kobaltkomplexfarbstoffen der Formel (IX), (X) und (XI) zusammen, 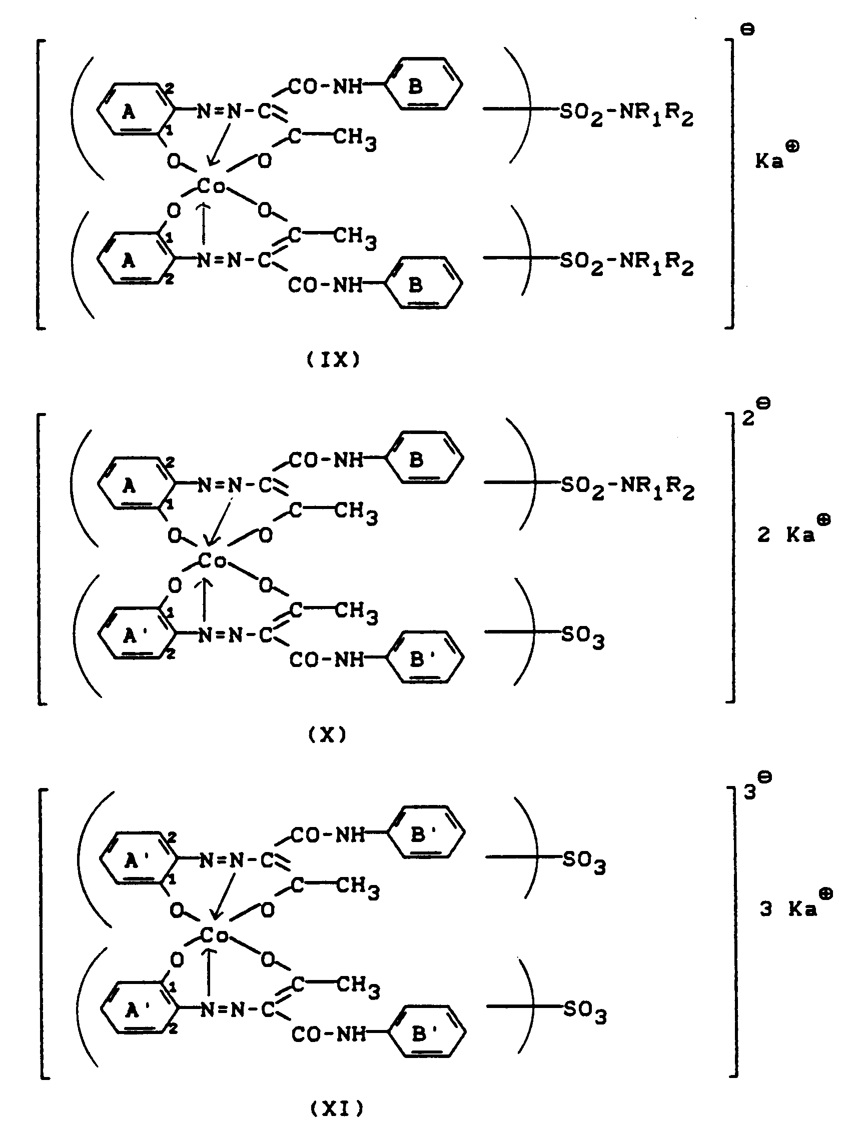
worin
- Ring A: in 4-Stellung durch SO₂-NR₁R₂, Cl oder NO₂ und in 4-Stellung durch NO₂ und 6-Stellung durch Cl,
- Ring Aʹ: in 4-Stellung durch SO₃, Cl oder NO₂, in 4-Stellung durch NO₂ und 6-Stellung durch Cl, in 4-Stellung durch NO₂ und 6-Stellung durch SO₃ und in 4-Stellung durch SO₃ und 6-Stellung durch Cl,
- Ring B: einmal durch SO₂-NR₁R₂ und zusätzlich ein- oder zweimal unabhängig voneinander durch CH₃, Cl oder OCH₃ und
- Ring Bʹ: einmal durch SO₃ und zusätzlich ein- oder zweimal unabhängig voneinander durch CH₃, Cl oder OCH₃ substituiert sein kann.

Weitere Beispiele für Farbstoffgemische in der Grundfarbe gelb sind Gemische aus den 1:2-Chromkomplexfarbstoffen der Formeln (XII), (XIII) und (XIV), 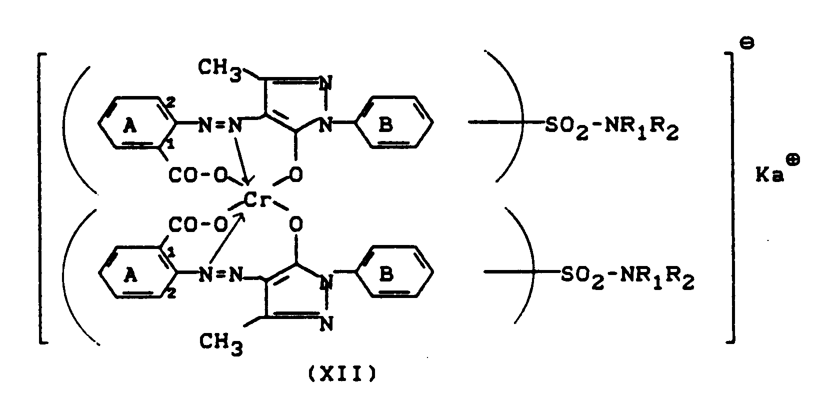 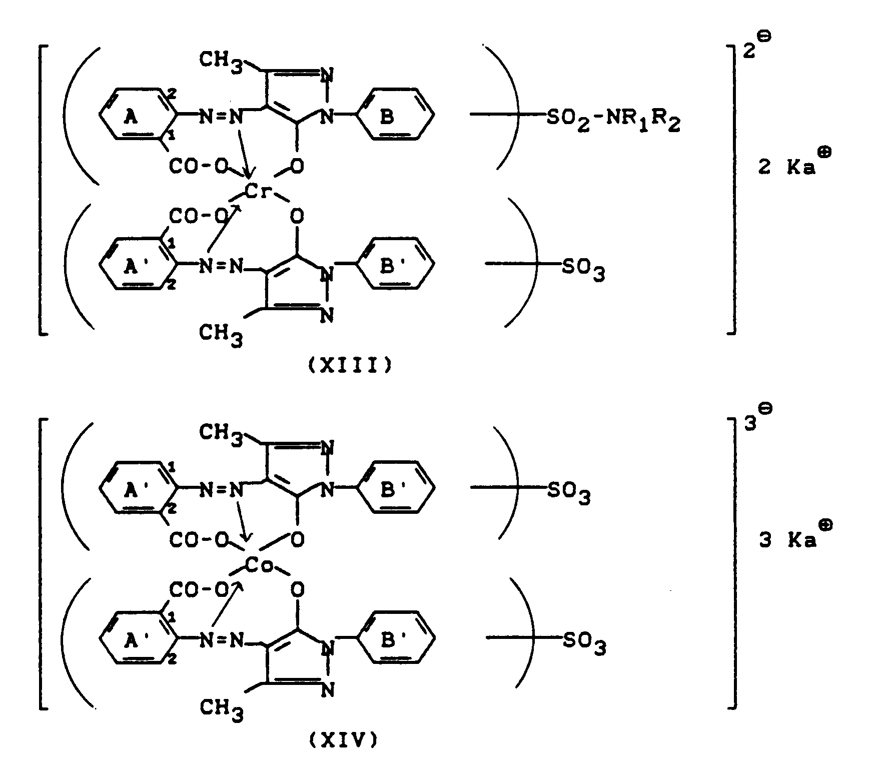
worin
- Ring A: in 4- oder 5-Stellung durch SO₂-NR₁R₂ oder NO₂, in 4-Stellung durch Cl und in 4- und 6-Stellung durch Cl,
- Ring Aʹ: in 4- oder 5-Stellung durch SO₃ oder NO₂, in 4-Stellung durch Cl und 4- und 6-Stellung durch Cl,
- Ring B: durch SO₂-NR₁R₂ und zusätzlich ein- oder zweimal unabhängig voneinander durch CH₃, Cl oder OCH₃ und
- Ring Bʹ: durch SO₃ und zusätzlich ein- oder zweimal unabhängig voneinander durch CH₃, Cl oder OCH₃ substituiert sein kann.

Geeignete Farbstoffgemische in der Grundfarbe rot sind beispielsweise Gemische von 1:2-Chromkomplexfarbstoffen der Formel (XV), (XVI) und (XVII), 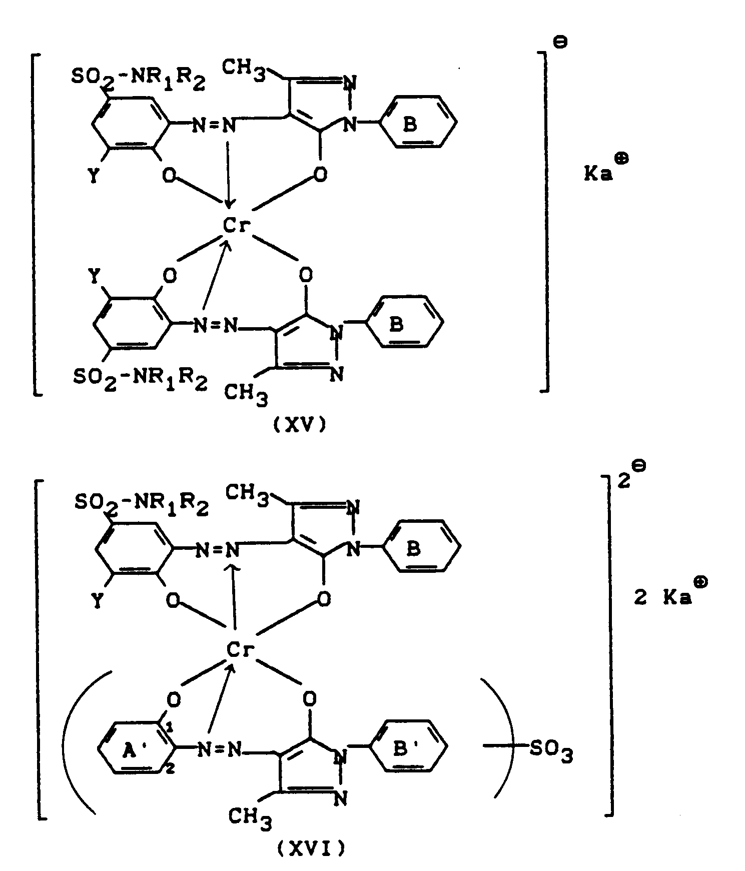 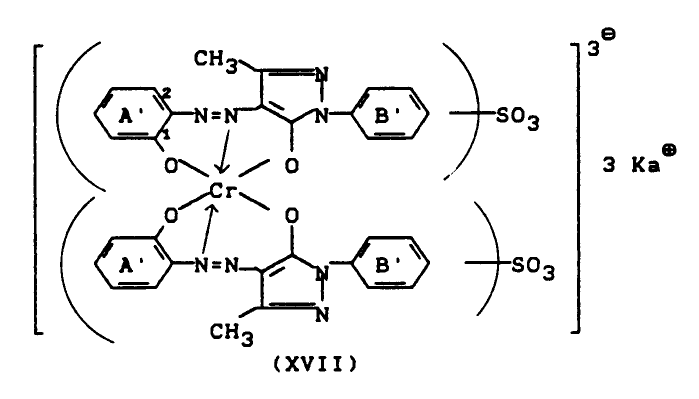
worin
- Y: für NO₂ oder Cl steht, und
- Ring Aʹ: in 4-Stellung durch Cl, in 4- und 6-Stellung durch Cl, in 4-Stellung durch Cl und 5- oder 6-Stellung durch NO₂, in 5-Stellung durch NO₂, in 4-Stellung durch SO₃ und in 6-Stellung durch Cl oder NO₂ und in 4-Stellung durch Cl und in 6-Stellung durch SO₃,
- Ring B: ein- oder zweimal unabhängig voneinander durch CH₃, Cl oder OCH₃ und
- Ring Bʹ: durch SO₃ und zusätzlich ein- oder zweimal unabhängig voneinander durch CH₃, Cl oder OCH₃ substituiert sein kann,
oder Gemische von 1:2-Chromkomplexfarbstoffen der Formeln (XVIII), (XIX) und (XX), 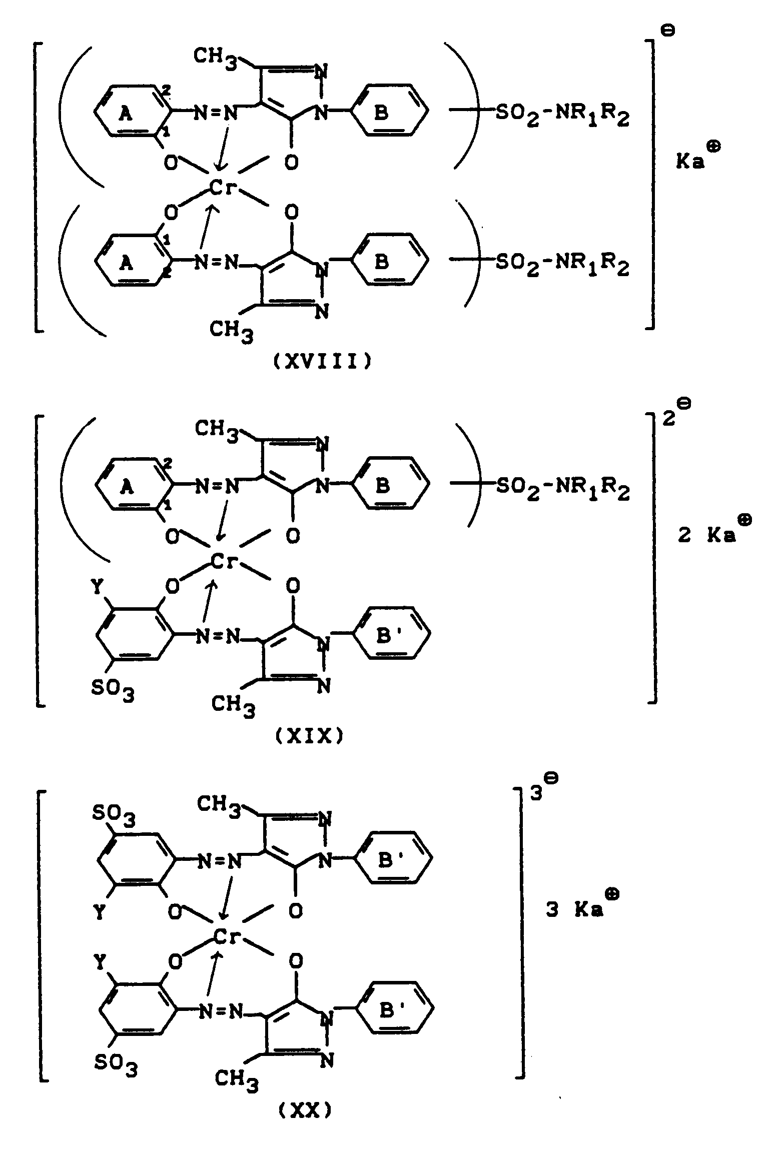
worin
- Y: für NO₂ oder Cl steht, und
- Ring A: in 5-Stellung durch SO₂-NR₁R₂ oder NO₂, in 4-Stellung durch Cl, in 4- und 6-Stellung durch Cl und in 4-Stellung durch Cl und 5- oder 6-Stellung durch NO₂,
- Ring B: durch SO₂-NR₁R₂ und zusätzlich ein- oder zweimal unabhängig voneinander durch CH₃, Cl oder OCH₃ und
- Ring Bʹ: ein- oder zweimal unabhängig voneinander durch CH₃, Cl oder OCH₃ substituiert sein kann.

Geeignete Farbstoffgemische in der Grundfarbe blau sind beispielsweise Gemische von 1:2-Chromkomplexfarbstoffen der Formeln (XXI), (XXII) und (XXIII), 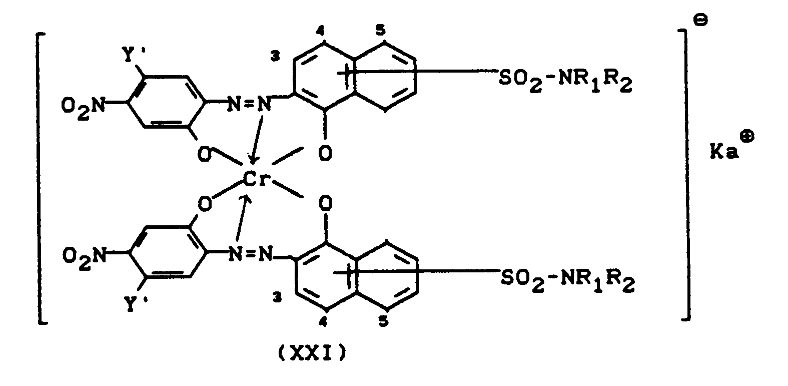 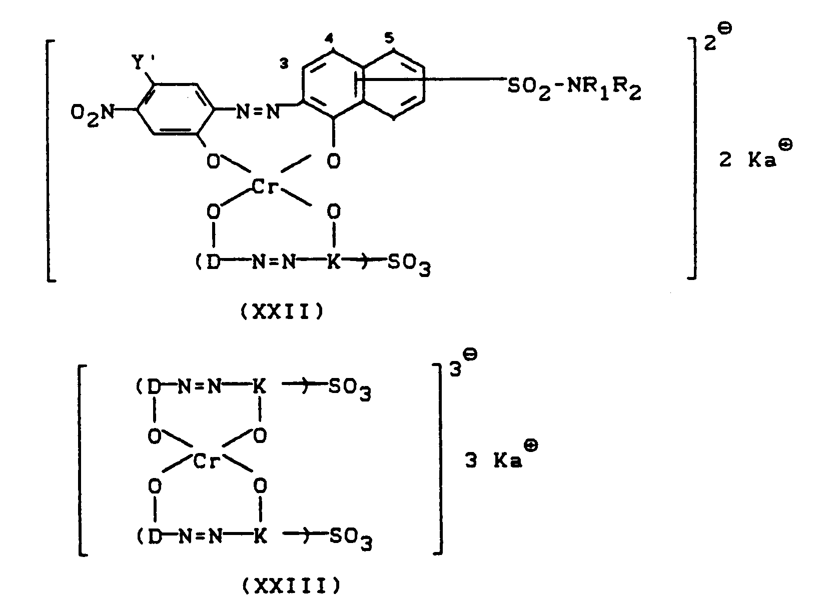
worin
SO₂-NR₁R₂ in Position 3, 4 oder 5 steht,
- Y': H oder Cl bedeutet und
- D =: Rest der 1-Amino-2-napthol-4-sulfonsäure, 6-Nitro-1-amino-2-naphthol-4-sulfonsäure, 6-Nitro-2-amino-1-hydroxybenzol-4-sulfonsäure, 4-Chlor-2-amino-1-hydroxybenzol-6-sulfonsäure oder des 4-Chlor-, 4,6-Dichlor-, 4-Chlor-6-nitro-, 4-Chlor-5-nitro- oder 5-Nitro-2-amino-1-hydroxybenzols oder 2-Amino-1-hydroxybenzol-5-sulfonamids oder -5-dimethyl-sulfonamids und
- K =: Rest des 1-Naphthols, 4-Methyl-1-naphthols, 5,8-Dichlor-1-naphthols, 4ʹ -Hydroxynaphtho-(2ʹ,-1ʹ:4,5)oxathiazol-S-dioxids, 2-Naphthols, 8-Methylsulfonylamino-2-naphthols, 8-Acetamino-2-naphthols, 6-Phenylamino-1-naphthol-3-sulfonsäure, 6-(4-Methoxyphenylamino)-1-naphthol-3-sulfonsäure, N-Dimethyl-m-aminophenols oder N-Diethyl-m-aminophenols.

Die erfindungsgemäß einzusetzenden Farbstoffgemische ziehen egal auf, bauen gut auf und decken gut ab. Sie können in Mengen von 0,1 bis 10 Gew.-%, vorzugsweise von 0,1 bis 6 Gew.-%, bezogen auf das trockene Färbegut, eingesetzt werden. Die resultierenden Pastell- und Volltöne unterscheiden sich nicht oder nur geringfügig in der Nuance. Infolge des guten Deckvermögens kommt die schmutzig grüne Eigenfarbe von chromgegerbtem Leder kaum zum Vorschein, so daß auch bei geringerer Farbtiefe die Nuance der Färbung durch die Eigenfarbe nicht abgetrübt wird.

Die folgenden Farbstoff- und Färbebeispiele veranschaulichen die Erfindung auf verschiedenen Ledertypen unter verschiedenen Färbebedingungen.

### A. Herstellung der Farbstoffgemische für die Grundfarben.

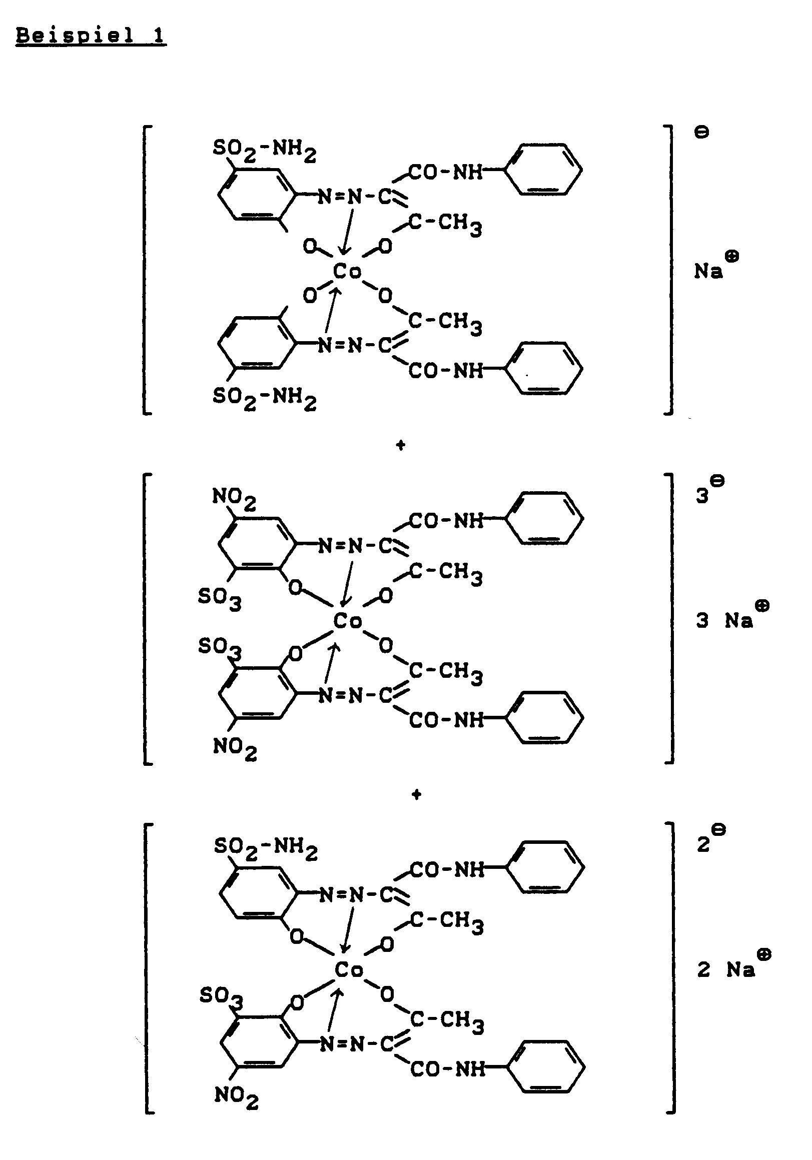

0,1 Mol Monoazofarbstoff aus diazotiertem 2-Amino-1-hydroxybenzol-4-sulfonamid und Acetessigsäureanilid und 0,1 Mol Monoazofarbstoff aus diazotierter 4-Nitro-2-amino-1-hydroxybenzol-6-sulfonsäure und der gleichen Kupplungskomponente werden in 700 ml Wasser angerührt. Die Suspension wird mit 0,1 Mol Kobaltsulfat versetzt und mit 5 n Natronlauge auf pH 10,0 gestellt. Das Gemisch wird innerhalb von 1 Stunde auf 70°C erwärmt und 2-3 Stunden bei dieser Temperatur und pH 10,0 gerührt, bis beide Ausgangsfarbstoffe vollständig kobaltiert sind. Die drei kobalthaltigen Farbstoffe, die durch Eindampfen isoliert werden, färben Leder in lichtechten gelben Farbtönen.

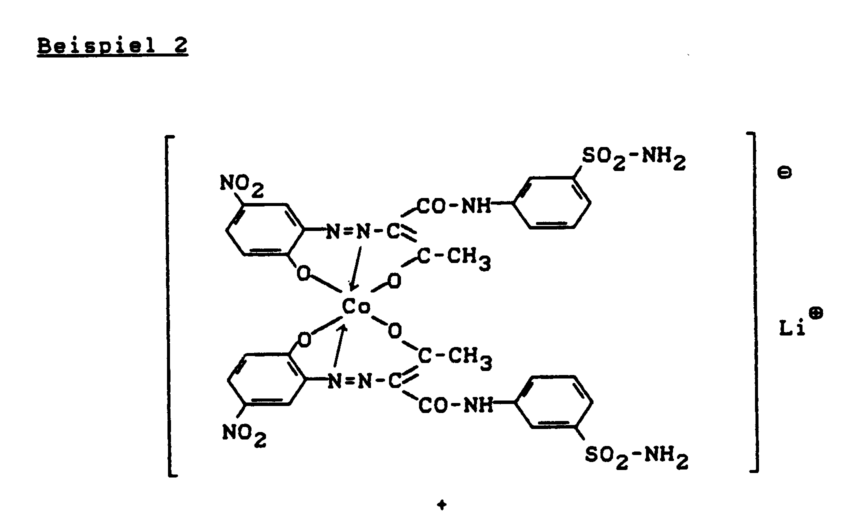

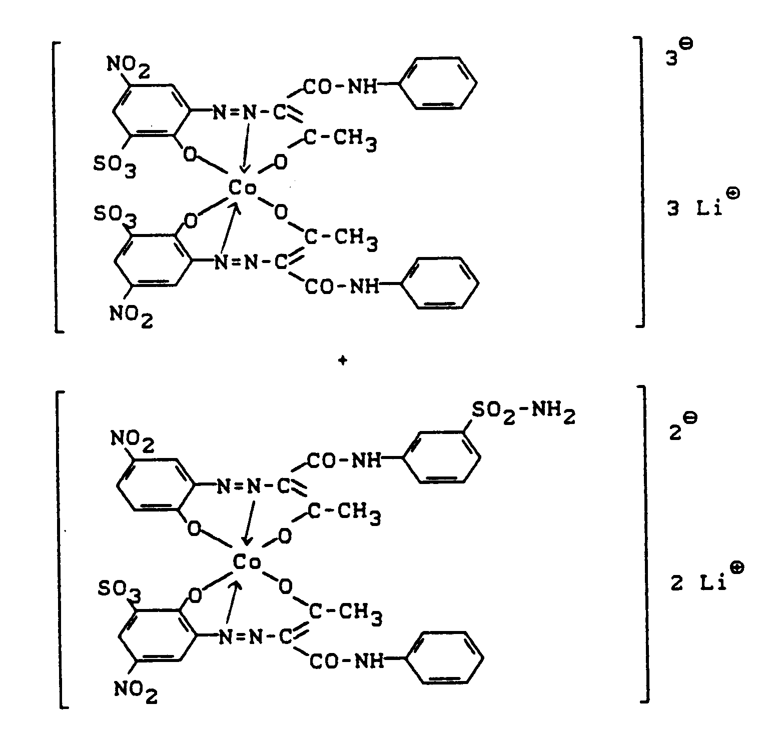

Je 0,1 Mol der beiden Monoazofarbstoffe aus diazotiertem 4-Nitro-2-amino-1-hydroxybenzol und Acetessigsäure(anilid-3-sulfonamid) und diazotierter 4-Nitro-2-amino-1-hydroxybenzol-6-sulfonsäure und Acetessigsäureanilid werden in 300 ml 1-Ethoxy-2-propanol und 150 ml Wasser angeteigt und mit 0,1 Mol Kobaltsulfat versetzt. Man erwärmt das ganze im Laufe von etwa 45 Minuten auf 80°C und fügt dabei portionsweise insgesamt 13 g LiOH.H₂O zu. Nach etwa einer Stunde Reaktionszeit bei 80°C ist die Kobaltierung beendet. Man läßt auf Raumtemperatur abkühlen, trennt die Salzrückstände durch Filtration ab und erhält eine dunkelbraune konzentrierte, lagerstabile Farbstofflösung, mit der man Leder in gelben lichtechten Farbtönen färben kann.

Unter den Bedingungen des Beispiel 1 und 2 erhält man weitere gelbe bis goldgelbe Farbstoffgemische als Pulver oder als Lösung, wenn man den Farbstoffen (1) und (2) der folgenden Tabelle ausgeht.

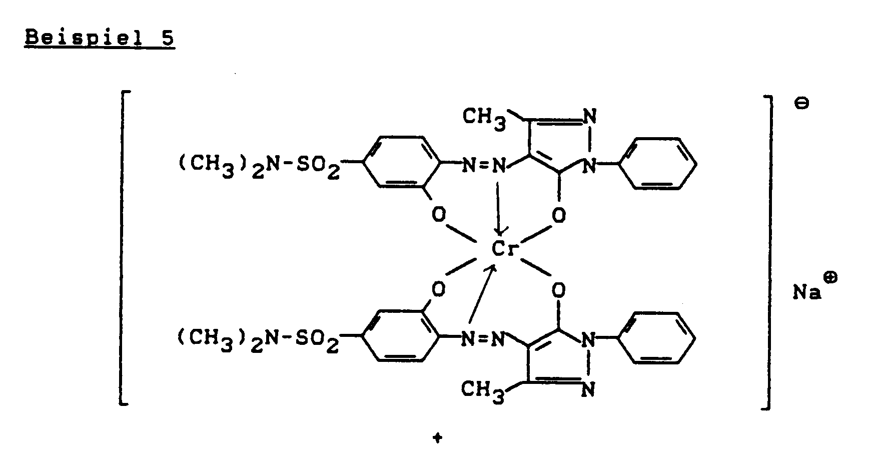

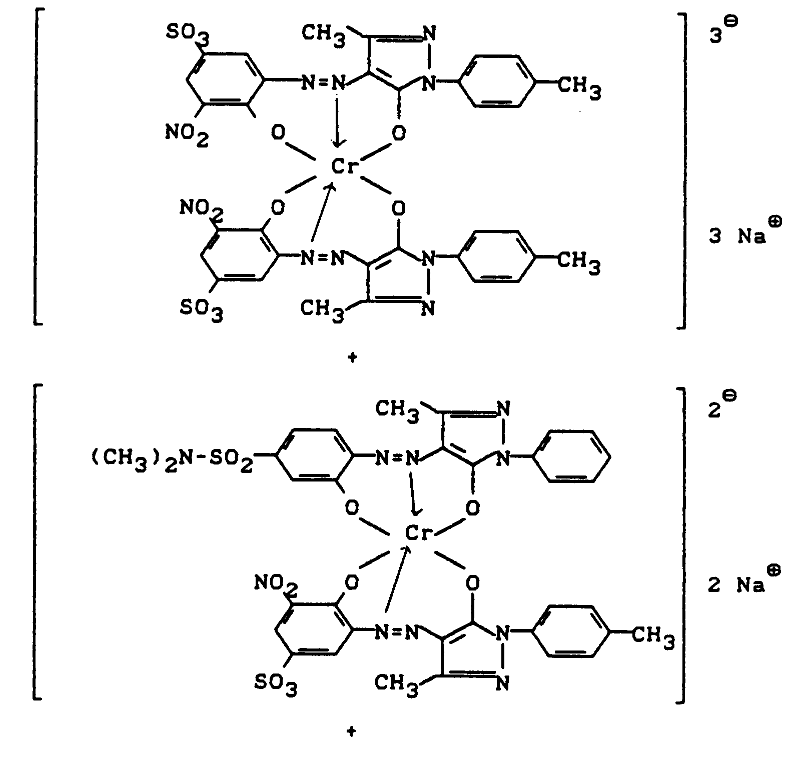

0,1 Mol Azofarbstoff aus diozotiertem 2-Amino-1-hydroxybenzol-5-dimethylsulfonamid und 1 Phenyl-3-methyl-5-pyrazolon und 0,1 Mol Azofarbstoff aus diazotierter 6-Nitro-2-amino-1-hydroxybenzol-4-sulfonsäure und 1-(4-Methylphenyl)-3-methyl-5-pyrazolon weden in 600 ml Wasser angerührt und mit 250 ml einer Natriumsalicylatlösung (entsprechend 5,2 g Chrom) versetzt. Das Gemisch wird etwa 2 Stunden unter Rückfluß erhitzt, bis beide Ausgangsfarbstoffe vollkommen chromiert sind. Am Ende der Reaktion werden die drei gebildeten 1:2-Chromkomplexe durch Eindunsten vom Wasser befreit. Der trockene Rückstand liefert nach dem Mahlen ein gut wasserlösliches dunkelbraunes Pulver, welches auf Leder klare rote Färbungen liefert.

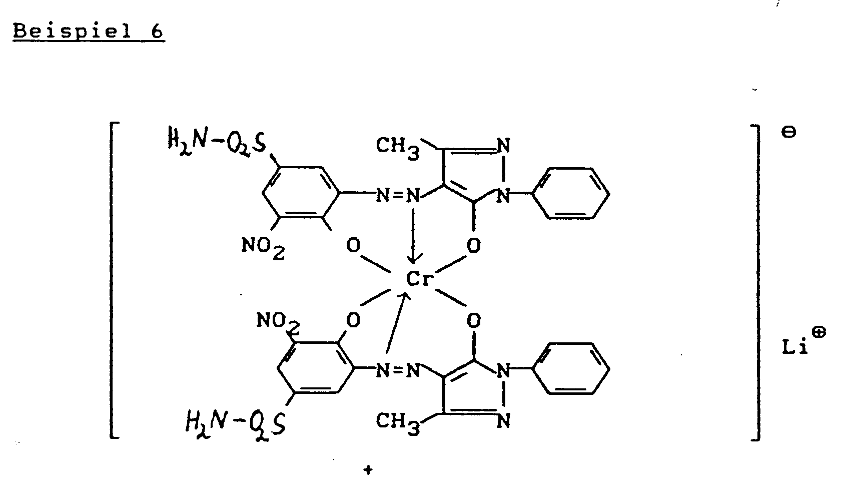

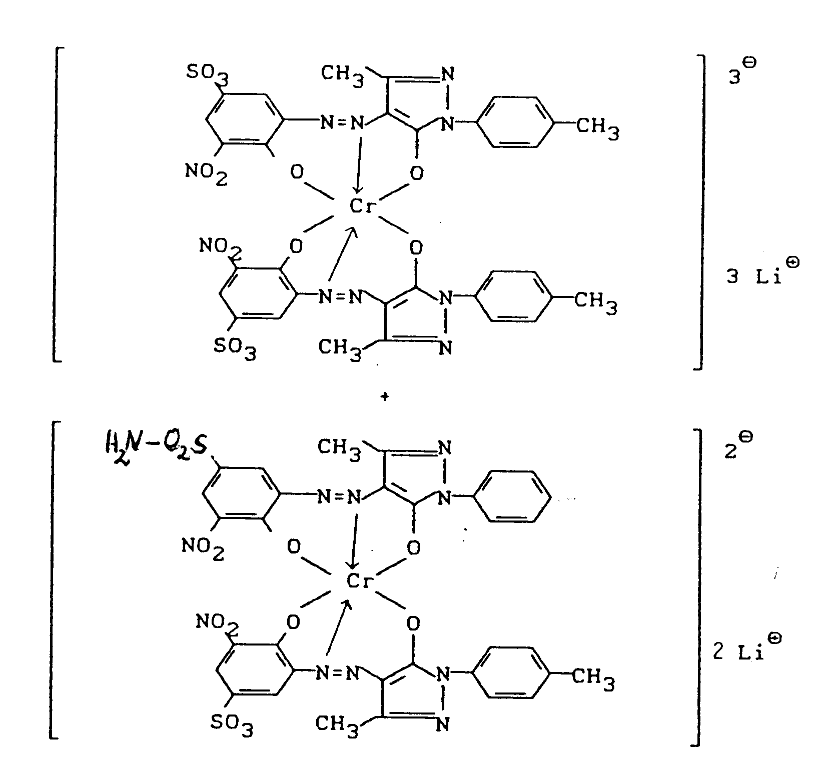

Je 0,1 Mol der beiden Kupplungsprodukte aus diazotiertem 6-Nitro-2-amino-1-hydroxybenzol-4-sulfonamid und 1-Phenyl-3-methyl-5-pyrazolon und aus diazotierter 6-Nitro-2-amino-1-hydroxybenzol-4-sulfonsäure und 1-(4-Methylphenyl)-3-methyl-5-pyrazolon werden als trockene Pulver in 300 ml 1-Ethoxy-2-propanol und 150 ml Wasser angeteigt. Die noch gut rührbare Masse wird mit 0,1 Mol basischem Chromacetat versetzt, allmählich innerhalb von 45 Minuten zum Sieden erhitzt und während des Aufheizens mit insgesamt 10,5 g LiOH·H₂O abgestumpft. Es entsteht rasch eine Lösung, die noch etwa 2 Stunden weiter gekocht wird, bis die Ausgangsfarbstoffe verschwunden sind. Die Lösung der Reaktionsprodukte wird nach Abkühlen auf Raumtemperatur durch Klären von den ausgefallenen Elektrolyten befreit. Man erhält eine dunkelbraune konzentrierte, lagerstabile Farbstofflösung, die Leder in klaren roten Tönen färbt.

Nach dem in Beispiel 5 und 6 angegebenen Verfahren gelangt man zu weiteren wertvollen roten Lederfarbstoffen, wenn man von den folgenden Farbstoffen ausgeht.

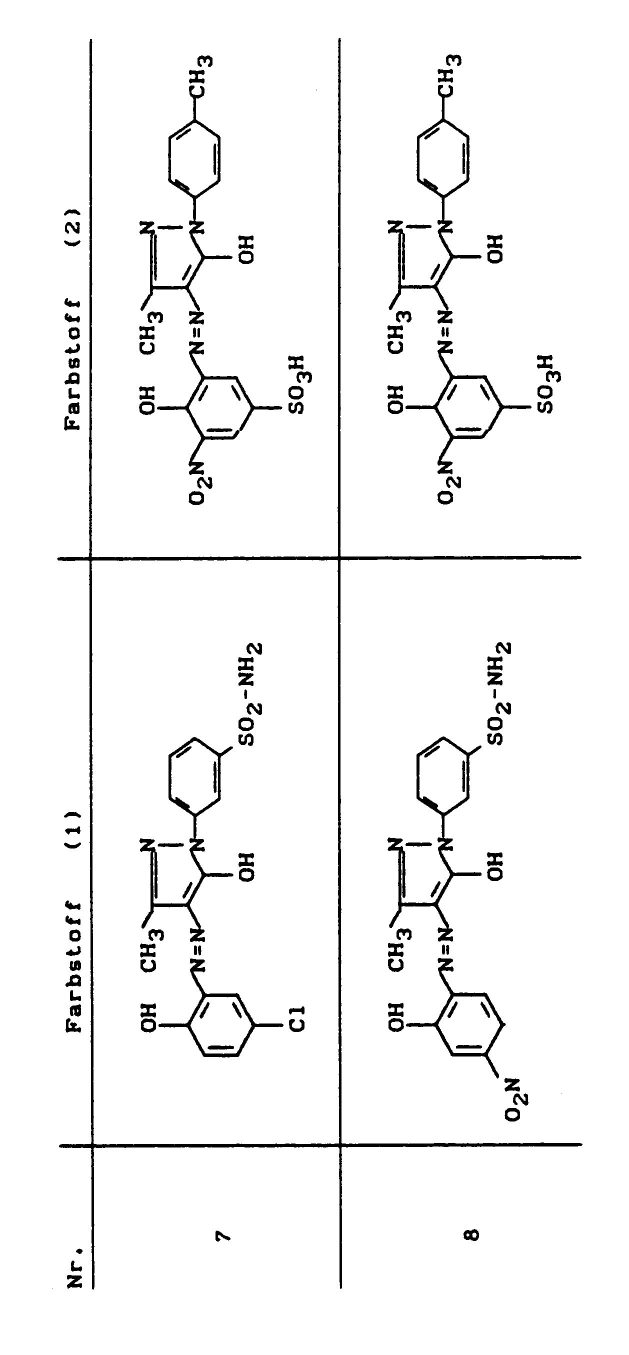

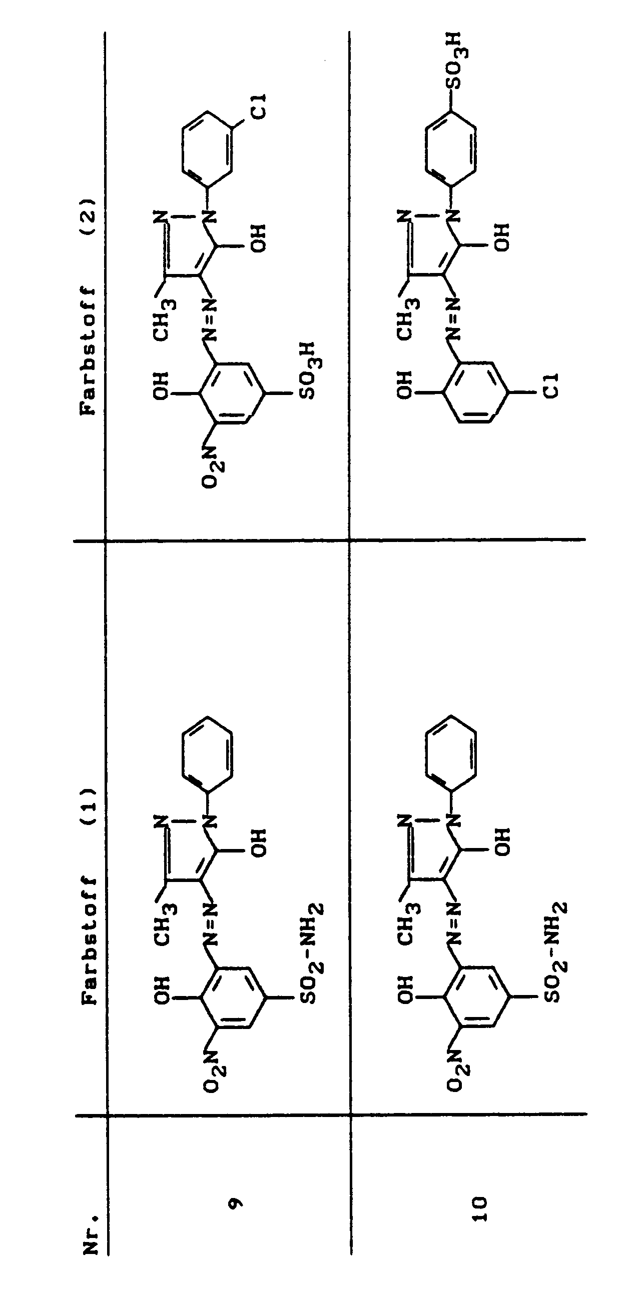

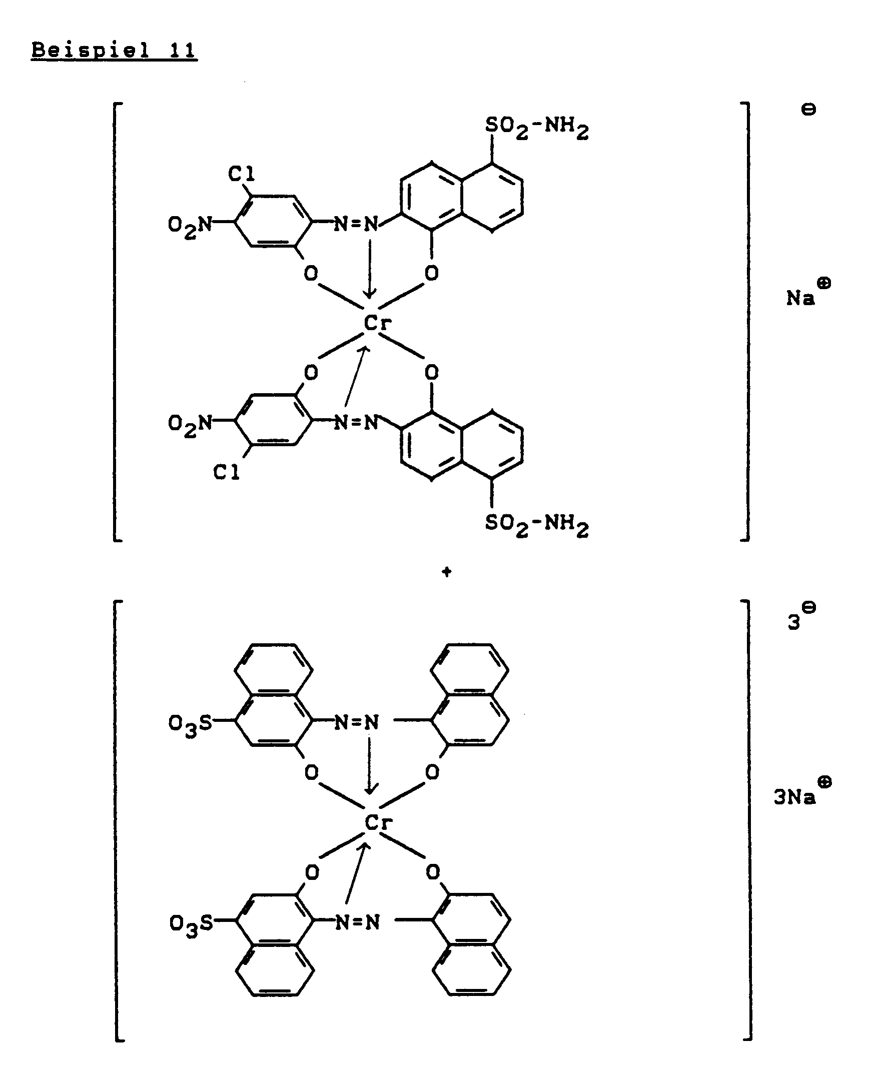

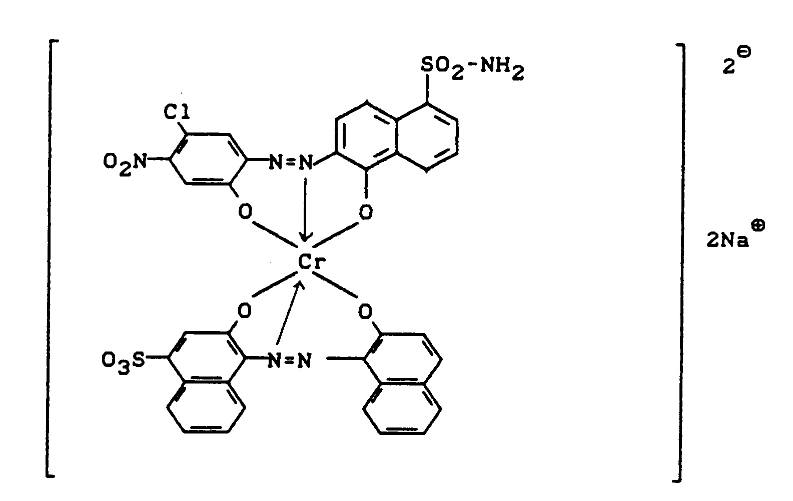

Jeweils 0,1 Mol der beiden Kupplungsprodukte aus Diazamidolsäure und 2-Naphthol und aus diazotiertem 4-Chlor-5-nitro-2-amino-1-hydroxybenzol und 1-Naphthol-5-sulfonamid werden zusammen mit 73 g einer basischen Chromacetatlösung (10,5 Gew.% Cr₂O₃) in 600 ml Wasser 2-3 Stunden unter Rückfluß erhitzt, bis im Chromatogramm keine Ausgangsstoffe mehr zu erkennen sind. Während des Kochens wird der pH durch Zutropfen von 25-30 ml 5 n Natronlauge im Bereich von 6-7 gehalten. Nach beendeter Reaktion wird die Lösung der chromhaltigen Produkte zur Trockne eingeengt. Man erhält ein dunkles Pulver, mit dem man auf Leder tiefblaue Färbungen erzielen kann.

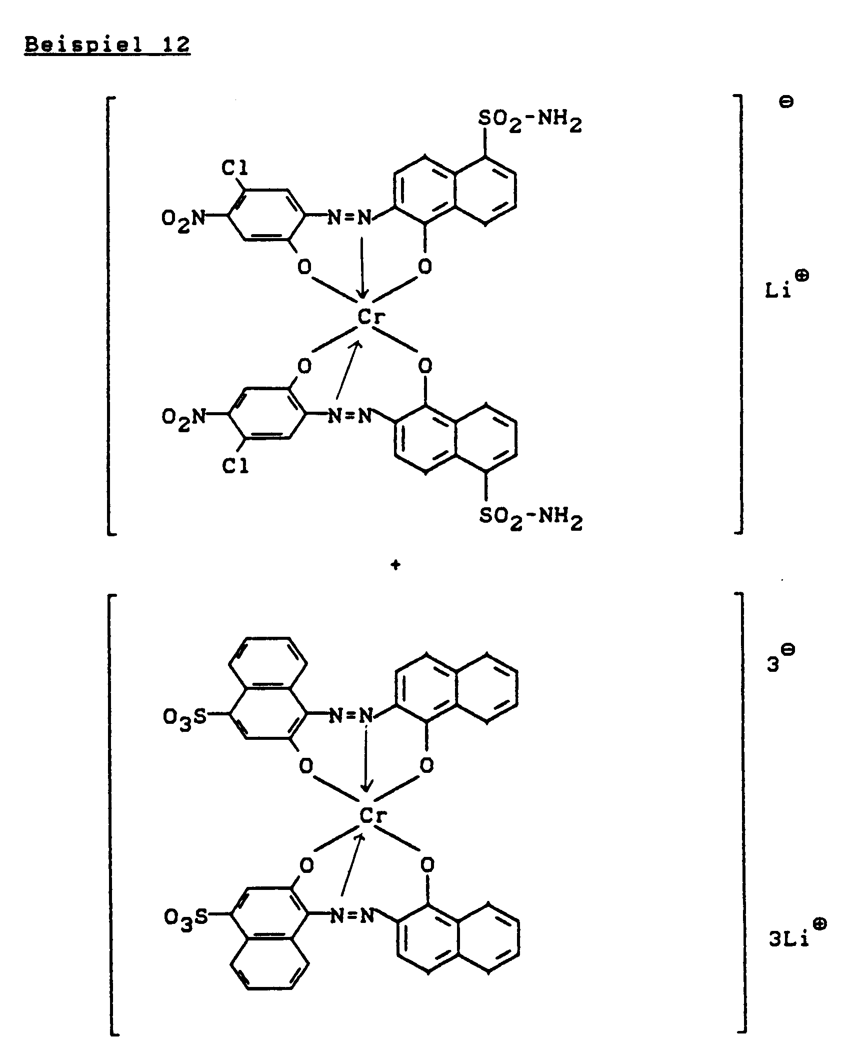

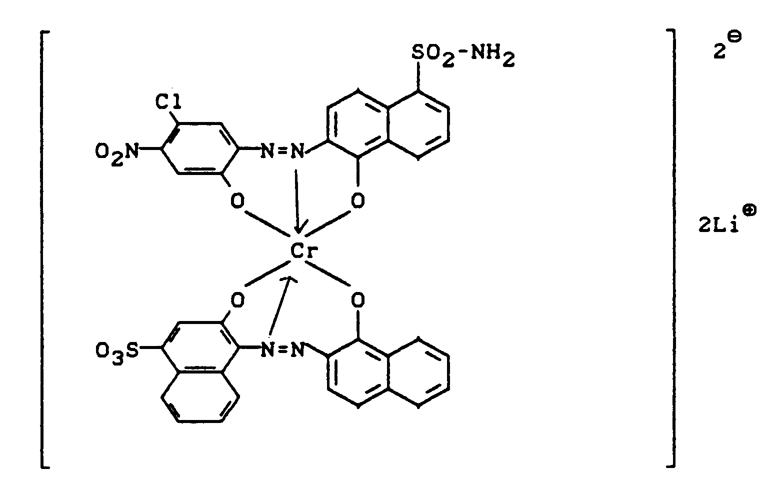

0,1 Mol Kupplungsprodukt aus diazotiertem 4-Chlor-5-nitro-2-amino-1-hydroxybenzol und 1-Naphthol-5-sulfonamid und 0,1 Mol Kupplungsprodukt aus Diazamidolsäure und 1-Naphthol werden als trockene Pulver zusammen mit 0,1 Mol basischem Chromacetat in 300 ml 1-Ethoxy-2-propanol und 150 ml Wasser angeteigt. Die pastöse Suspension wird langsam im Verlauf von etwa 45 Minuten zum Sieden erhitzt und dabei portionsweise mit insgesamt 10,5 g LiOH·H₂O versetzt. Nach Erreichen des Siedepunktes tritt rasch eine Lösung ein, die noch ca. 2 Stunden gekocht wird, bis die Ausgangsfarbstoffe verschwunden sind. Am nächsten Tag werden bei Raumtemperatur die ausgefallenen Elektrolyte durch Filtration abgetrennt. Man erhält eine schwarze konzentrierte, lagerstabile Farbstofflösung, deren blauen Lederfärbungen etwas grünstichiger sind als diejenigen des Farbstoffes von Beispiel 11.

Chromiert man die folgenden Farbstoffpaare nach den Bedingungen des Beispiels 11 und 12, so erhält man weitere wertvolle blaue 1:2-Chromkomplexfarbstoff-Gemische.

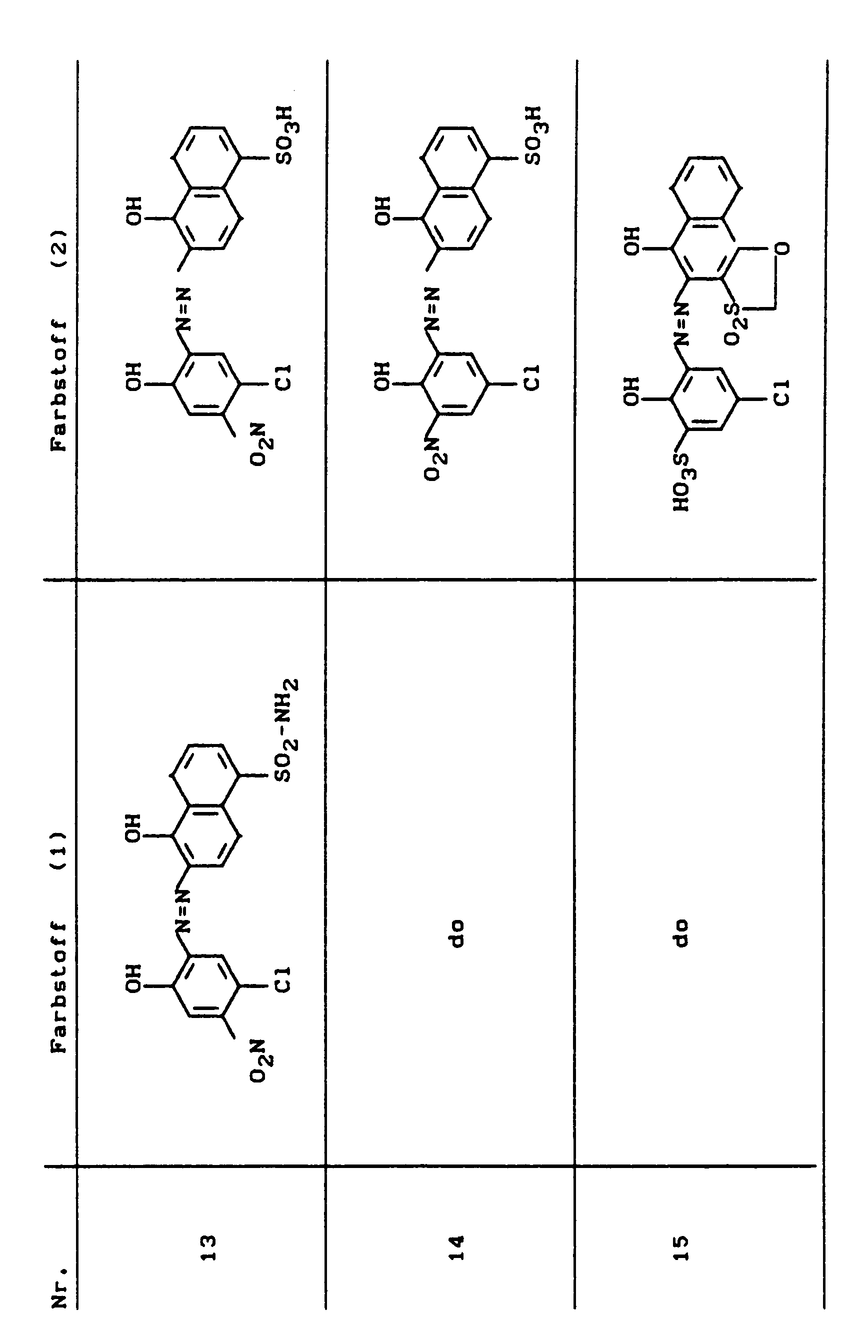

### B. Färbebeispiele mit Mischungen der Grundfarben.

### Beispiel 16

100 Teile chromgegerbtes und mit synthetischen Gerbstoffen nachgegerbtes Kalbfell der Falzstärke 0,7 mm werden zunächst 60 Minuten lang in 1000 Teilen Wasser und 2 Teilen technischem Ammoniak bei 50°C broschiert. Man läßt die Flotte ablaufen, wäscht mit 1000 Teilen 50°C warmem Wasser und färbt in 500 Teilen frischem Wasser und einem Teil eines Penetrators mit dem ungelösten Farbstoffgemisch aus 0,55 Teilen des gelben Farbstoffes von Beispiel 1, 0,48 Teilen des roten Farbstoffes von Beispiel 5 und 0,17 Teilen des blauen Farbstoffes von Beispiel 11 bei 50°C. Nach einer Färbedauer von 60 Minuten wird das Bad mit 1,2 Teilen 85 %iger Ameisensäure bis pH 3,5 abgesäuert, und das Leder in einer neuen Flotte von 500 Teilen Wasser mit 0,6 Teilen der oben eingesetzten Farbstoffmischung überfärbt. Nach der sich anschließenden Fixierung mit 0,6 Teilen 85 %iger Ameisensäure folgen ein Waschgang, eine Nachbehandlung mit Hydrophobierungsmitteln und ein Spülgang. Trocknung, Millen und Spannen ergeben schließlich ein gut durchfärbtes Bekleidungsleder in einem lichtechten mittelbrauen Farbton.

### Beispiel 17

100 Teile einer nachgegerbten und gefetteten wet blue Spalte der Falzstärke 1,6 mm werden in 1000 Teilen Wasser und 2 Teilen technischem Ammoniak 3 Stunden lang bei 60°C vorgewalkt und anschließend mit 35°C heißem Wasser gespült. Das Material wird nun ohne Flotte mit 1 Teil technischem Ammoniak und dem ungelösten Farbstofgemisch aus 1,2 Teilen des gelben Farbstoffes von Beispiel 1, 1,04 Teilen des roten Farbtsoffes von Beispiel 5 und 0,37 Teilen des blauen Farbstoffes von Beispiel 11, 30 Minuten gefärbt und nach Zulaufen von 500 Teilen 70-80°C heißem Wasser ebenso lange mit 4 Teilen eines Fettungsmittelgemisch aus Basis von natürlichen und synthetischen Fettkörpern gefettet. Nach der Fixierung mit 2,6 Teilen 85 %iger Ameisensäure wird mit 1,3 Teilen des oben verwendeten heiß gelösten Farbstoffgemisches 30 Minuten überfärbt und wieder mit 1,3 Teilen 85 %iger Ameisensäure gesäuert. Das Leder wird nach einem Spülgang auf dem Bock getrocknet und auf die übliche Weise konditioniert. Man erhält einen gut durchfärbten Schuhvelours in einem schweißechten mittelbraunen Farbton, der in der Nuance mit der Lederfärbung des Beispiel 1 übereinstimmt.

### Beispiel 18

100 Teile gefalzte Kalbspalte der Falzstärke 9,0 mm werden nach üblichen Methoden gewaschen, nachgegerbt, neutralisiert und getrocknet. Das Leder wird nun in 1000 Teilen Wasser und 2 Teilen technischem Ammoniak zwei Stunden vorlaufen gelassen, mit 50°C beißem Wasser gespült und in einem Bad von 500 Teilen Wasser und 1 Teil technischem Ammoniak 60 Minuten lang bei 50°C mit dem ungelösten Farbstoffgemisch aus 1,28 Teilen des gelben Farbstoffes von Beispiel 1, 1,28 Teilen des roten Farbstoffes von Beispiel 5 und 0,64 Teilen des blauen Farbstoffes von Beispiel 11 gefärbt. Nach einer Fettung mit 5 Teilen nativen und künstlichen Fetten wird die Färbung 30 Minuten lang mit 3,2 Teilen 85 %iger Ameisensäure bei 50°C fixiert. Anschließend wird das Material mit 1 Teil eines mit Wasser mischbaren Silicon-Lüsters und 2 Teilen eines Weichmachers hydrophobiert, gespült, getrocknet und mechanisch zu einem Bekleidungsverlours aufgearbeitet. Die Nuance der Färbung ist rotbraun.

### Beispiel 19

100 Teile chromgegerbte, mit synthetischen Gerbstoffen nachgegerbte, gefettete und getrocknete Rindhaut werden in 1000 Teilen Wasser und 2 Teilen technischem Ammoniak 90 Minuten bei 50°C vorbehandelt und nach einem Spülgang mit einem Teil eines Penetrators, 4 Teilen eines anionischen Färbereihilfsmittels und dem Farbstoffgemisch aus 1,12 Teilen des gelben Farbstoffes von Beispiel 1, 1,12 Teilen des roten Farbstoffes von Beispiel 5 und 0,56 Teilen des blauen Farbstoffes von Beispiel 11 60 Minuten lang in 500 Teilen Wasser bei 40°C gefärbt. Die Färbung wird 30 Minuten lang bei gleicher Temperatur mit 2,8 Teilen 85 %iger Ameisensäure gesäuert und in einem frischen 50°C heißem Bad mit 1 Teil eines mit Wasser mischbaren Silicon-Lüsters und zwei Teilen eines anionischen Weichmachers nachbehandelt. Danach wird das Färbegut gespült, getrocknet und entsprechend der Verwendung als Möbelnubuk konditioniert. Die erzielte rotbruane Färbung stimmt in der Nuance mit der nach Beispiel 18 erhaltenen Ausfärbung überein.

### Beispiel 20

100 Teile chromgegerbtes Rindleder der Falzstärke 1,8 mm wird auf dem üblichen Weg mit synthetischen Gerbstoffen nachgegerbt, mit 0,5 Teilen Natriumformiat und 1 Teil Natriumbicarbonat neutralisiert und ohne Zwischentrocknung gefärbt. Zum Färbegang werden der Flotte von 50 Teilen 40°C heißem Wasser 2 Teile technischer Ammoniak, 3 Teile eines anionischen Egalisiermittels und das ungelöste Farbstoffgemisch aus 1,19 Teilen des gelben Farbstoffes von Beispiel 1, 0,60 Teilen des roten Farbstoffes von Beispiel 5 und 0,71 Teilen des blauen Farbstoffes von Beispiel 11 zugesetzt. Das Leder wird 60 Minuten bei 40°C laufen gelassen, bis eine gute Einfärbung erzielt ist. Man setzt 100 Teile Wasser zu, fixiert 30 Minuten lang mit 2,5 Teilen 85 %iger Ameisensäure und deckt mit 1,5 Teilen des oben eingesetzten Farbstoffgemisches ab. Nach der überlichen Behandlung mit 1,5 Teilen 85 %iger Ameisensäure wird die Färbung in einer neuen Flotte von 100 Teilen Wasser bei 50°C mit 0,5 Teilen eines mit Wasser mischbaren Silicon-Lüsters und 1 Teil eines anionischen Weichmachers hydrophobiert. Nach der Trocknung und der mechanischen Aufarbeitung erhält man ein Rindnubuk in einem olivbraunen lichtechten Farbton.

### Beispiel 21

Bearbeitet man 100 Teile chromgegerbte und zwischengetrocknete Rindhaut genau wie in Beispiel 19 beschrieben, verwendet aber anstatt des dort eingesetzten Farbstoffgemisches ein Gemisch aus 1,43 Teilen des gelben Farbstoffes von Beispiel 1, 0,72 Teilen des roten Farbstoffes von Beispiel 5 und 0,85 Teilen des blauen Farbstoffes von Beispiel 11, so erhält man ein olivbraunes Möbelnubuk, dessen Nuance mit dem gefärbten Rindnubuk des Beispiel 20 übereinstimmt.

### Beispiel 22

Eine Flotte aus 27,8 Teilen gelber Farbstofflösung des Beispiel 2, 13,9 Teilen roter Farbstofflösung des Beispiel 6 und 8,3 Teilen blauer Farbstofflösung des Beispiel 12, 100 Teilen 1-Methoxy-2-propanol, 50 Teilen eines flüssigen Grundierungsbinders auf Polyurethan-Basis und 850 Teilen Wasser wird im Spritzverfahren auf Softy Rindbox aufgetragen. Nach dem Trocknen erhält man ein hellbraun gefärbtes Leder, das als Schuhoberleder verwendbar ist.

### Beispiel 23

Narben-Crustleder wird auf einer MULTIMA®-Färbemaschine 10 Sekunden in eine 45°C warme Flotte aus 27,8 Teilen gelber Farbstofflösung des Beispiel 2, 13,9 Teilen roter Farbstofflösung des Beispiel 6 und 8,3 Teilen blauer Farbstofflösung des Beispiel 12, 100 Teilen Isopropanol und 850 Telen Wasser eingetaucht. Nach einer Hängetrocknung erhält man ein hellbraun gefärbtes Leder, dessen Nuance sehr gut mit der nach Beispiel 22 erzielten Spritzfärbung übereinstimmt.

Nach den in den Beispielen 16-23 angegebenen Verfahren lassen sich ausgezeichnete Kombinationsfärbungen der gelben Farbstoffe der Beispiele 1-4 mit den roten Farbstoffen der Beispiele 5-10 und/oder den blauen Farbstoffen der Beispiele 11-15 bzw. der roten Farbstoffe der Beispiel 5-10 den blauen Farbstoffen der Beispiele 11-15 erhalten.

## Patentansprüche

1. Verfahren zum Färben von Leder mit Mischungen von mindestens zwei Farbstoffen unterschiedlicher Grundfarbe, dadurch gekennzeichnet, daß man solche Farbstoffmischungen verwendet, bei denen jede der Kombinationsfarben ein Gemisch von Farbstoffen der allgemeinen Formeln (I), (II) und (III) darstellt: 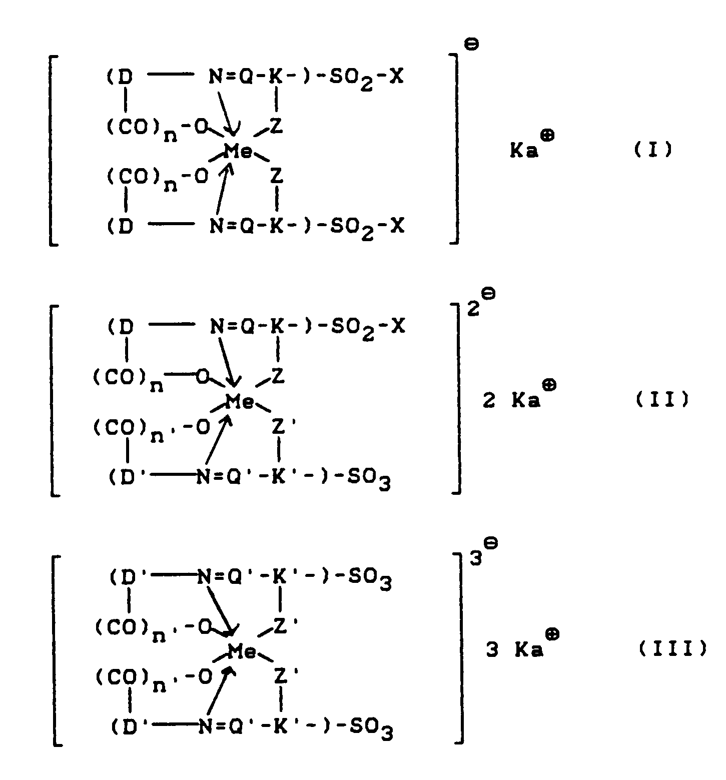 worin
SO₂-X an den Resten D oder K und
SO₃ an den Resten Dʹ oder Kʹ gebunden ist,
D, Dʹ den Rest einer Diazokomponente der Benzol- und Naphthalinreihe mit zur Azo- bzw. Azomethingruppe o-ständiger Hydroxy- oder Carboxygruppe,
Q, Qʹ Stickstoff oder CH,
K, Kʹ den Rest einer carbocyclischen oder heterocyclischen Kupplungskomponente, wenn Q Stickstoff ist, wobei die metallbindende Gruppe Z in o-Stellung zur Azogruppe steht, oder, falls Q die CH-Gruppe ist, den Rest eines o-Hydroxyaldehyds,
Z, Zʹ Sauerstoff, NH oder N-Alkyl und
n, nʹ 0 oder 1 bedeuten,
X für NH₂, durch Alkyl, Cycloalkyl, Aralkyl oder Aryl mono- oder disubstituiertes NH₂, Aryloxy oder Alkyl,
Me für Chrom oder Kobalt und
Ka^{⊕} für ein Kation steht und
die Reste D, Dʹ K, Kʹ und Z und Zʹ gleich oder verschieden sein können.

2. Verfahren gemäß Anspruch 1, wobei die Kombinationsfarbstoffe jeweils Gemische von in der Nuance eng beieinanderliegenden 1:2-Metallkomplexfarbstoffen der Formel (IV), (V) und (VI) darstellen: 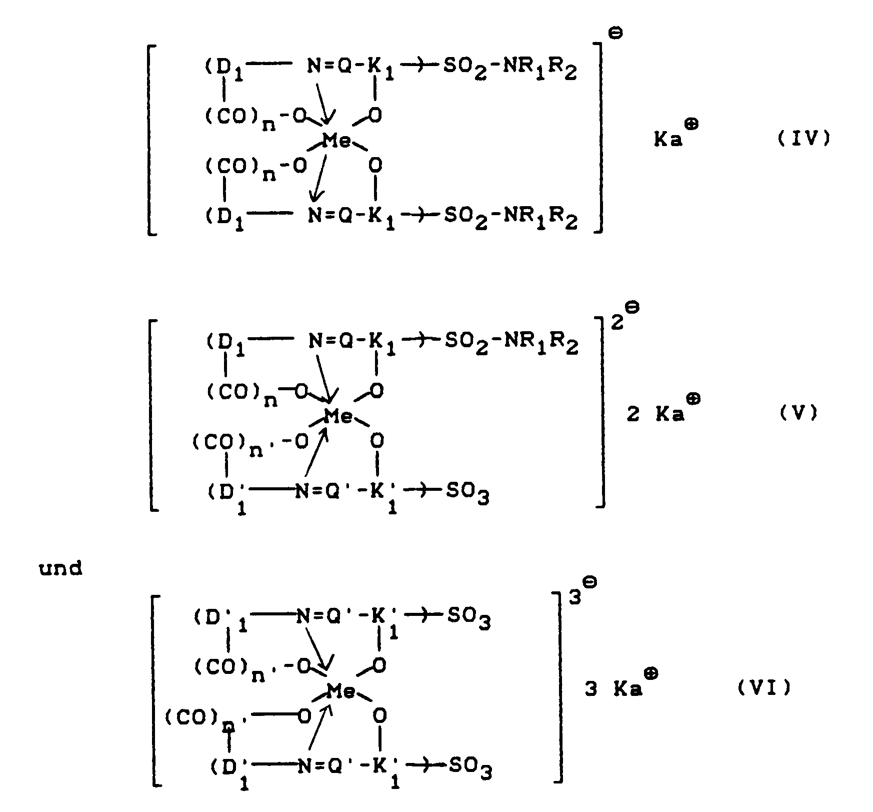 worin
R₁ H oder Alkyl und
R₂ H, Alkyl oder Aryl bedeutet, und
D₁, Dʹ₁ Rest eines gegebenenfalls durch SO₃ bzw. SO₂-NR₁R₂, Cl, NO₂ und CH₃ unabhängig ein-oder zweimal substituierten 2-Amino-1-hydroxybenzols oder 1-Amino-2-naphthols oder einer gegebenenfalls durch SO₃ bzw. SO₂-NR₁R₂, NO₂, Cl oder zwei Cl substituierten 2-Aminobenzoesäure und
K₁, K₁ʹ falls Q für Stickstoff steht, Rest des Resorcins, m-Phenylendiamins, m-Aminophenols, eines N-mono- oder -dialkylsubstituierten m-Aminophenols oder eines gegebenenfalls durch SO₃ bzw. SO₂-NR₁R₂ substituierten Kupplungskomponente der 1-Naphthol-, 2-Naphthol-, 1-Phenyl-3-methyl-5-pyrazolon- oder Acetessigsäureanilid-Reihe, wobei die Phenylgruppe der 1-Phenylpyrazolone und Acetessigsäureanilide vorzugsweise durch C₁-C₄-Alkyl, C₁-C₄-Alkoxy und Cl unabhängig voneinander ein- oder zweimal substituiert sein kann, oder, falls Q für CH steht, Rest eines 2-Hydroxybenzaldehyds oder arylazosubstituierten 2-Hydroxybenzaldehyds, wobei die Arylgruppe vorzugsweise eine gegebenenfalls durch SO₃ bzw. SO₂-NR₁R₂, Cl, NO₂, CH₃ oder OCH₃ unabhängig voneinander ein-oder zweimal substituierte Phenylgruppe darstellt.

3. Verfahren nach Anspruch 1, wobei die Grundfarbe gelb ein Gemisch von Farbstoffen der Formeln (IX), (X) und (XI) darstellt: 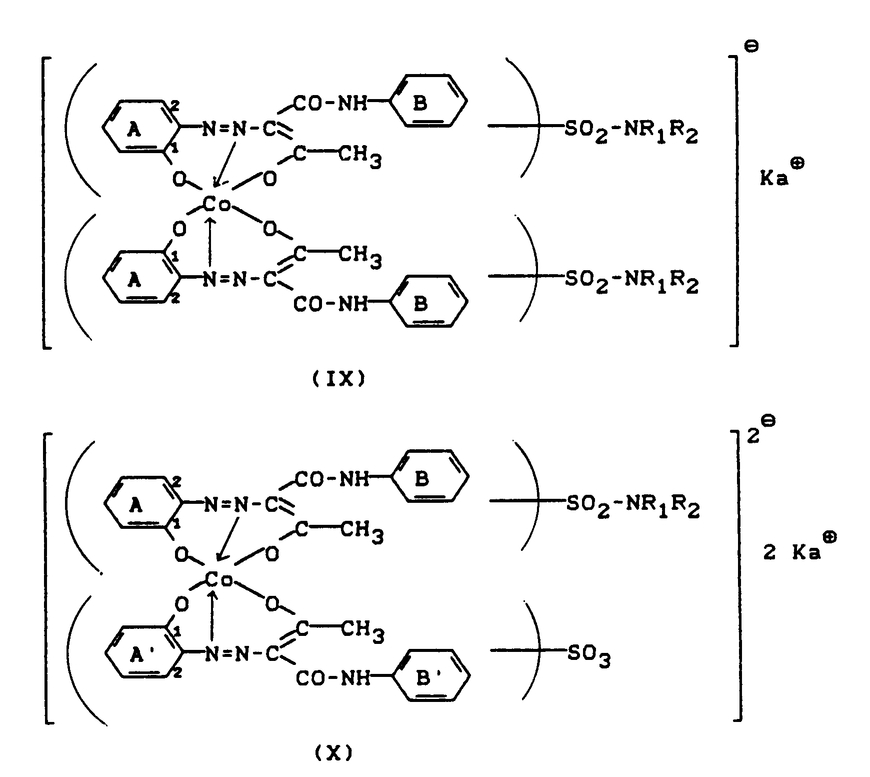 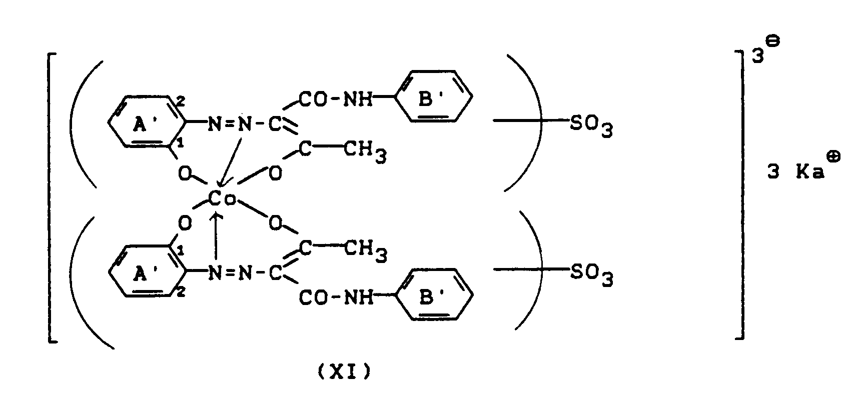 worin
Ring A in 4-Stellung durch SO₂-NR₁R₂, Cl oder NO₂ und in 4-Stellung durch NO₂ und 6-Stellung durch Cl,
Ring Aʹ in 4-Stellung durch SO₃, Cl oder NO₂, in 4-Stellung durch NO₂ und 6-Stellung durch Cl, in 4-Stellung durch NO₂ und 6-Stellung durch SO₃ und in 4-Stellung durch SO₃ und 6-Stellung durch Cl,
Ring B einmal durch SO₂-NR₁R₂ und zusätzlilch ein-oder zweimal unabhängig voneinander durch CH₃, Cl oder OCH₃ und
Ring Bʹ einmal durch SO₃ und zusätzlich ein- oder zweimal unabhängig voneinander durch CH₃, Cl oder OCH₃ substituiert sein kann.

4. Verfahren nach Anspruch 1, wobei die Grundfarbe gelb ein Gemisch von Farbstoffen der Formel (XII), (XIII) und (XIV) darstellt: 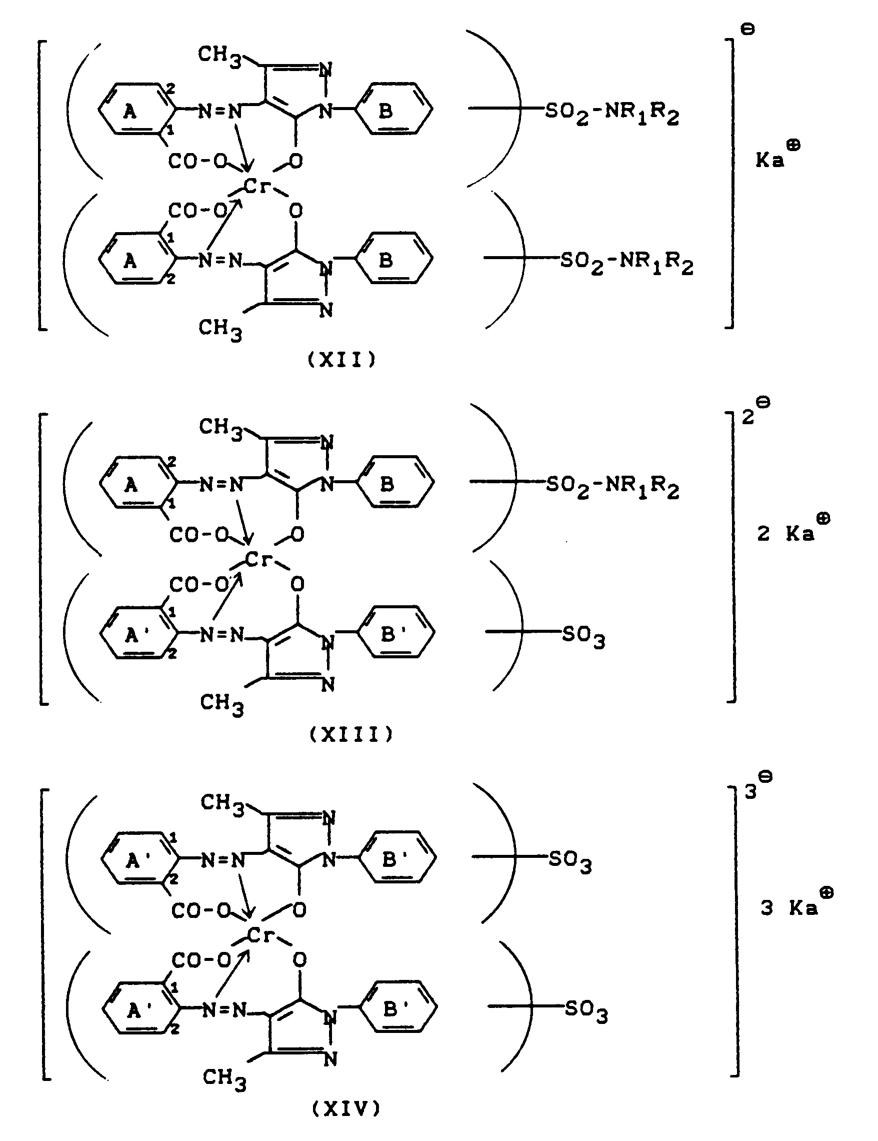 worin
Ring A in 4- oder 5-Stellung durch SO₂-NR₁R₂ oder NO₂, in 4-Stellung durch Cl und in 4- und 6-Stellung durch Cl,
Ring Aʹ in 4- oder 5-Stellung durch SO₃ oder NO₂, in 4-Stellung durch Cl und in 4- und 6-Stellung durch Cl,
Ring B durch SO₂-NR₁R₂ und zusätzlich ein- oder zweimal unabhängig voneinander durch CH₃, Cl oder OCH₃ und
Ring Bʹ durch SO₃ und zusätzlich ein- oder zweimal unabhängig voneinander durch CH₃, Cl oder OCH₃ substituiert sein kann.

5. Verfahren nach Anspruch 1, wobei die Grundfarbe rot ein Gemisch von Farbstoffen der Formeln (XV), (XVI) und (XVII) darstellt: 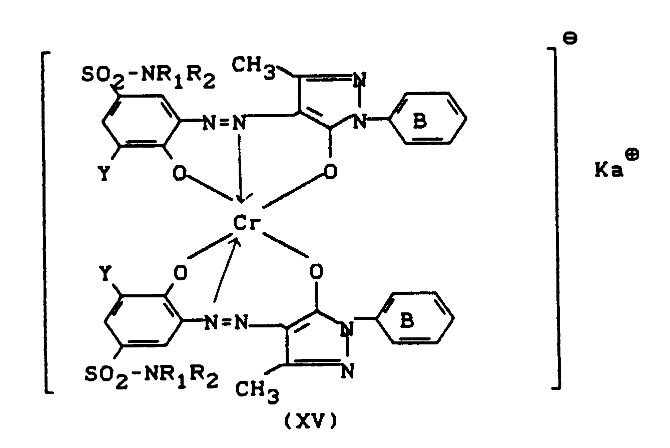 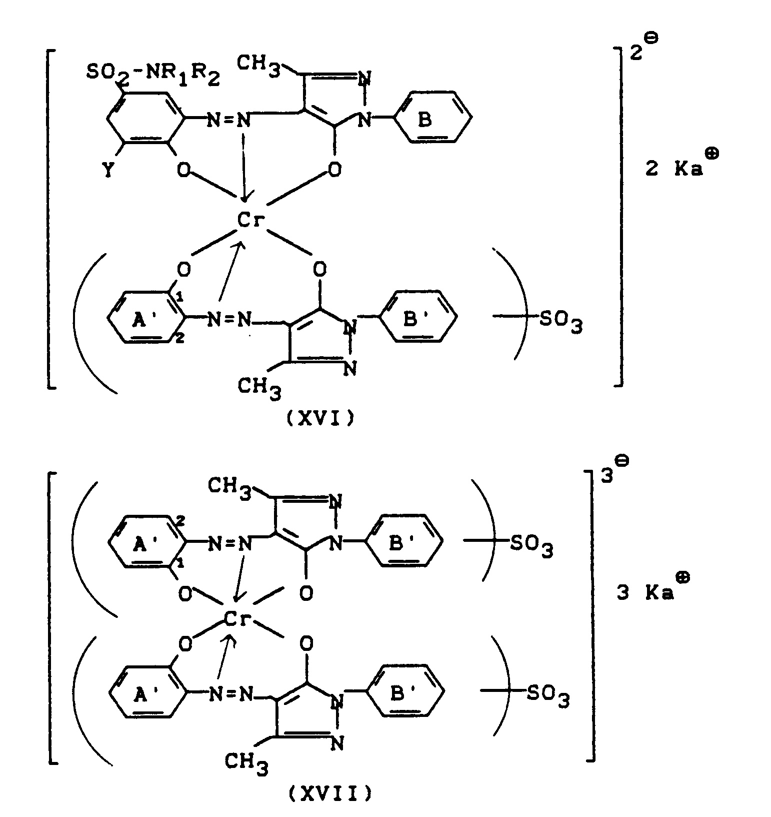 worin
Y für NO₂ oder Cl steht, und
Ring Aʹ in 4-Stellung durch Cl, in 4- und 6-Stellung durch Cl, in 4-Stellung durch Cl und 5- oder 6-Stellung durch NO₂, in 5-Stellung durch NO₂, in 4-Stellung durch SO₃ und in 6-Stellung durch Cl oder NO₂ und in 4-Stellung durch Cl und in 6-Stellung durch SO₃,
Ring B ein- oder zweimal unabhängig voneinander durch CH₃, Cl oder OCH₃ und
Ring Bʹ durch SO₃ und zusätzlich ein- oder zweimal unabhängig voneinander durch CH₃, Cl oder OCH₃ substituiert sein kann.

6. Verfahren nach Anspruch 1, wobei die Grundfarbe rot ein Gemisch von Farbstoffen der Formeln (XVIII), (XIX) und (XX) darstellt: 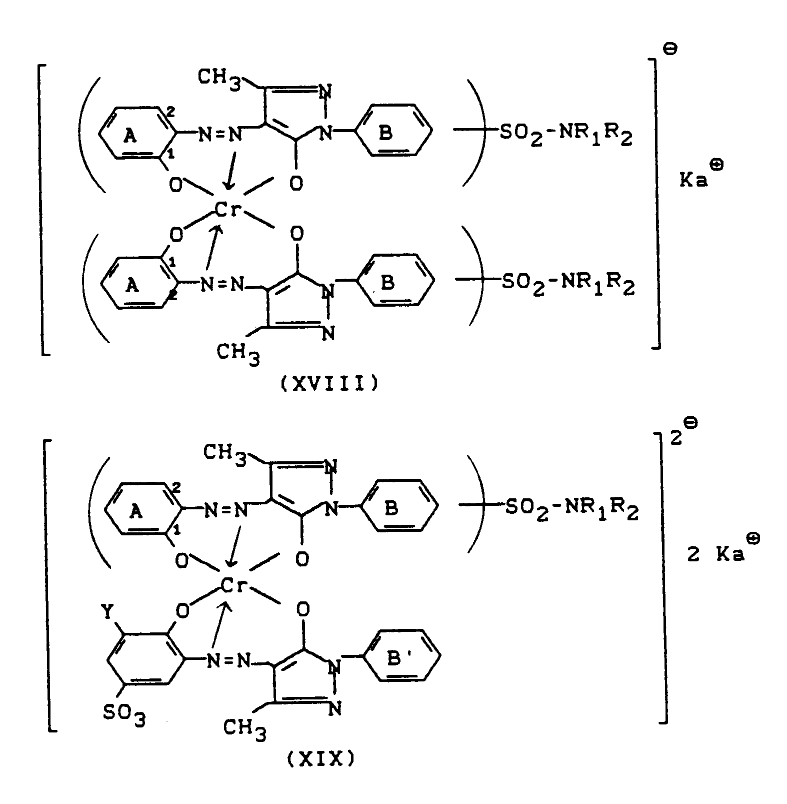 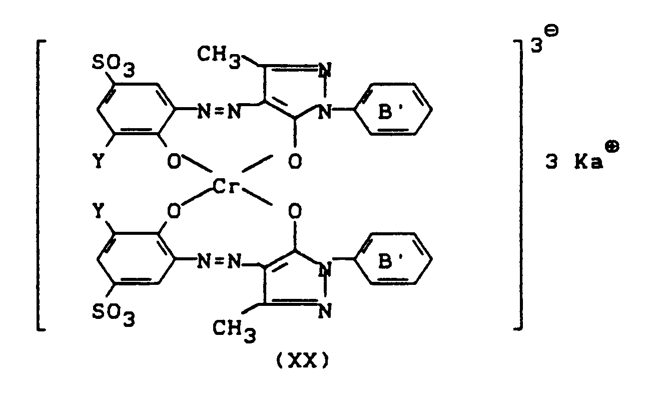 worin
Y für NO₂ oder Cl steht, und
Ring A in 5-Stellung durch SO₂-NR₁R₂ oder NO₂, in 4-Stellung durch Cl, in 4- und 6-Stellung durch Cl und in 4-Stellung durch Cl und 5-oder 6-Stellung durch NO₂,
Ring B durch SO₂-NR₁R₂ und zusätzlich ein- oder zweimal unabhängig voneinander durch CH₃, Cl oder OCH₃ und
Ring Bʹ ein- oder zweimal unabhängig voneinander durch CH₃, Cl oder OCH₃ substituiert sein kann.

7. Verfahren nach Anspruch 1, wobei die Grundfarbe blau ein Gemisch der Farbstoffe der Formeln (XXI), (XXII) und (XXIII) darstellt: 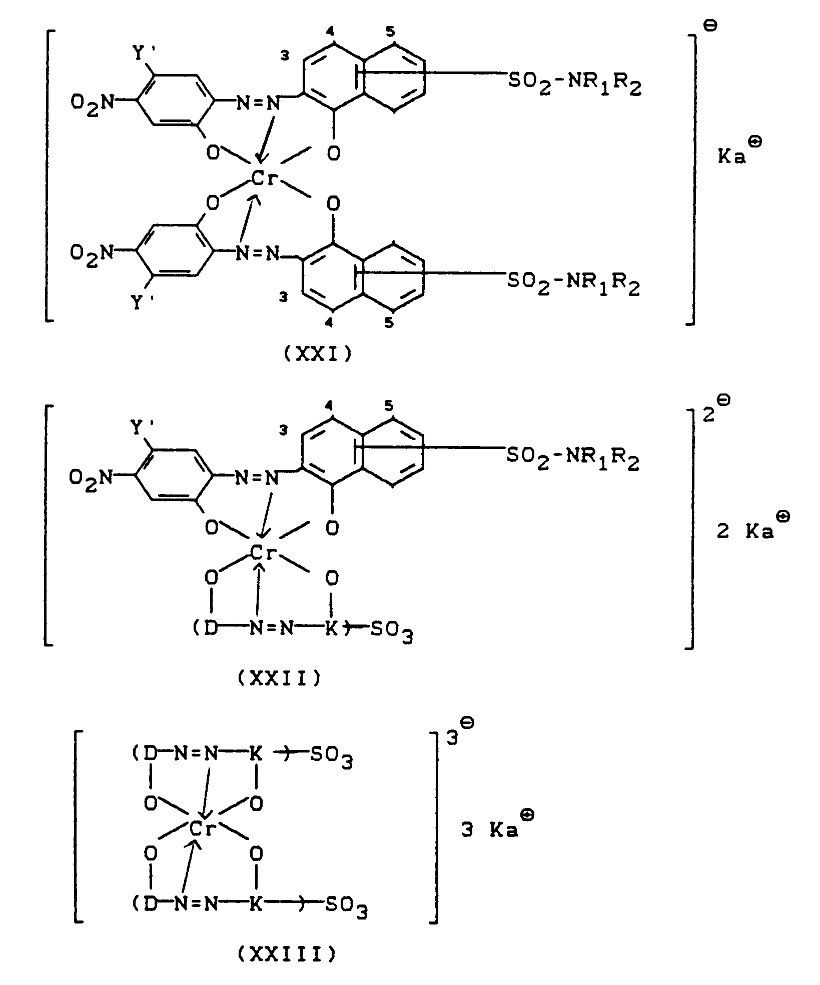 worin
SO₂-NR₁R₂ in Position 3, 4 oder 5 steht,
Yʹ H oder Cl bedeutet und
D = Rest der 1-Amino-2-napthol-4-sulfonsäure, 6-Nitro-1-amino-2-naphthol-4-sulfonsäure, 6-Nitro-2-amino-1-hydroxybenzol-4-sulfonsäure, 4-Chlor-2-amino-1-hydroxybenzol-6-sulfonsäure oder des 4-Chlor-, 4,6-Dichlor-, 4-Chlor-6-nitro-, 4-Chlor-5-nitro- oder 5-Nitro-2-amino-1-hydroxybenzols, 2-Amino-1-hydroxybenzol-5-sulfonamids oder -5-dimethylsulfonamids und
K = Rest des 1-Naphthols, 4-Methyl-1-naphthols, 5,8-Dichlor-1-naphthols, 4ʹ-Hydroxynaphtho-(2',1ʹ:4,5)oxathiazol-S-dioxids, 2-Naphthols, 8-Methylsulfonylamino-2-naphthols, 8-Acetamino-2-naphthols, 6-Phenylamino-1-naphthol-3-sulfonsäure, 6-(4-Methoxyphenylamino)-1-naphthol-3-sulfonsäure, N-Dimethyl-m-aminophenols oder N-Diethyl-m-aminophenols.

## Claims

1. Process for the dyeing of leather with mixtures of at least two dyestuffs of different primary colours, characterised in that in the dyestuff mixtures used each of the combination colours is a mixture of dyestuffs of the general formulae (I), (II) and (III): 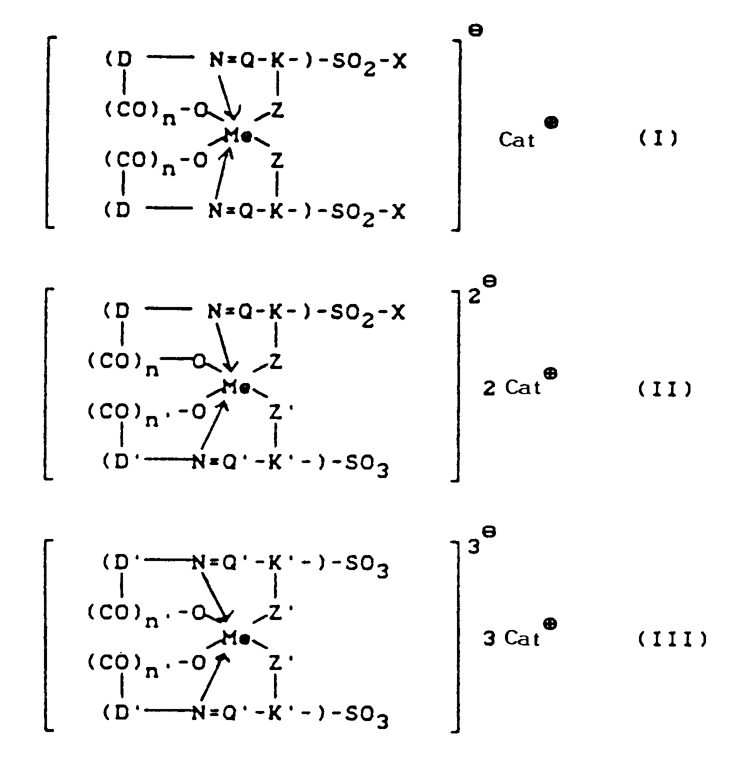 in which
SO₂-X is bound to the radicals D or K and
SO₃ is bound to the radicals D' or K',
D, D' denote the radical of a diazo component from the benzene and naphthalene series containing a hydroxyl or carboxyl group which is in the o position relative to the azo or azomethine group,
Q, Q' denote nitrogen or CH,
K, K' denote the radical of a carbocyclic or heterocyclic coupling component if Q is nitrogen, the metal-binding group Z being in the o position relative to the azo group, or denote the radical of an o-hydroxyaldehyde if Q is a CH group,
Z, Z' denote oxygen, NH or N-alkyl and
n, n' denote 0 or 1,
X represents NH₂, NH₂ which is mono- or disubstituted by alkyl, cycloalkyl, aralkyl or aryl, or represents aryloxy or alkyl,
Me represents chromium or cobalt, and
Cat^{⊕} represents a cation, and
the radicals D, D', K, K' and Z and Z' can be identical or different.

2. Process according to Claim 1, in which the combination dyestuffs are each mixtures of very similarly hued 1:2 metal complex dyestuffs of the formula (IV), (V) and (VI): 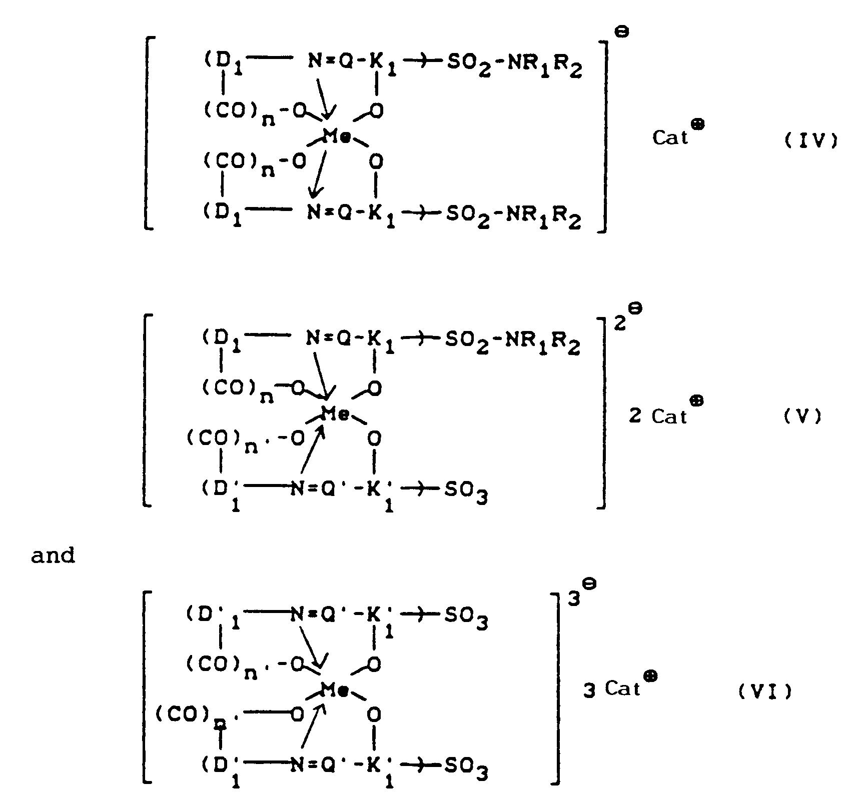 in which
R₁ denotes H or alkyl and
R₂ denotes H, alkyl or aryl, and
D₁, D'₁ denote the radical of a 2-amino-1-hydroxybenzene or 1-amino-2-naphthol each of which is unsubstituted or independently mono- or disubstituted by SO₃ or SO₂-NR₁R₂, Cl, NO₂ and CH₃ or of a 2-aminobenzoic acid which is unsubstituted or substituted by SO₃ or SO₂-NR₁R₂, NO₂, Cl or two Cl, and
K₁, K'₁ denote the radical of resorcinol, m-phenylenediamine, m-aminophenol, of an N-mono- or -dialkyl substituted m-aminophenol or of an unsubstituted or SO₃- or SO₂-NR₁R₂-substituted coupling component from the 1-naphthol, 2-naphthol, 1-phenyl-3-methyl-5-pyrazolone or acetoacetanilide series, it being possible for the phenyl group of the 1-phenylpyrazolones and acetoacetanilides to be, independently of one another, mono- or disubstituted, preferably, by C₁-C₄-alkyl, C₁-C₄-alkoxy and Cl, if Q represents nitrogen, or the radical of a 2-hydroxybenzaldehyde or arylazo-substituted 2-hydroxybenzaldehyde, the aryl group preferably representing a phenyl group which is unsubstituted or, independently of one another, mono- or disubstituted by SO₃ or SO₂-NR₁R₂, Cl, NO₂, CH₃ or OCH₃, if Q represents CH.

3. Process according to Claim 1, in which the primary colour yellow is a mixture of dyestuffs of the formulae (IX), (X) and (XI): 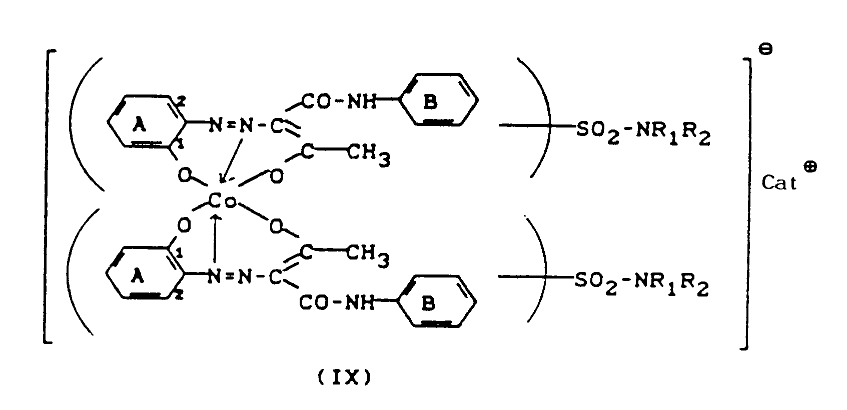 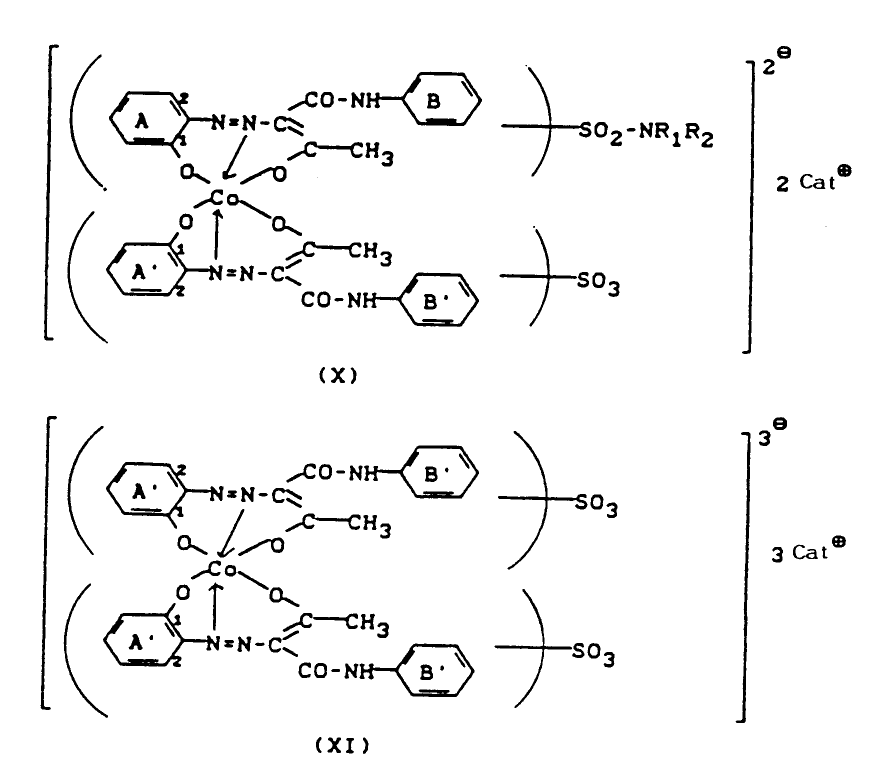 in which
ring A can be substituted in the 4 position by SO₂-NR₁R₂, Cl or NO₂ and in the 4 position by NO₂ and the 6 position by Cl,
ring A' can be substituted in the 4 position by SO₃, Cl or NO₂, in the 4 position by NO₂ and the 6 position by Cl, in the 4 position by NO₂ and the 6 position by SO₃ and in the 4 position by SO₃ and the 6 position by Cl,
rings B can be substituted once by SO₂-NR₁R₂ and additionally, independently of one another, once or twice by CH₃, Cl or OCH₃, and
rings B' can be substituted once by SO₃ and additionally, independently of one another, once or twice by CH₃, Cl or OCH₃.

4. Process according to Claim 1, in which the primary colour yellow is a mixture of dyestuffs of the formula (XII), (XIII) and (XIV): 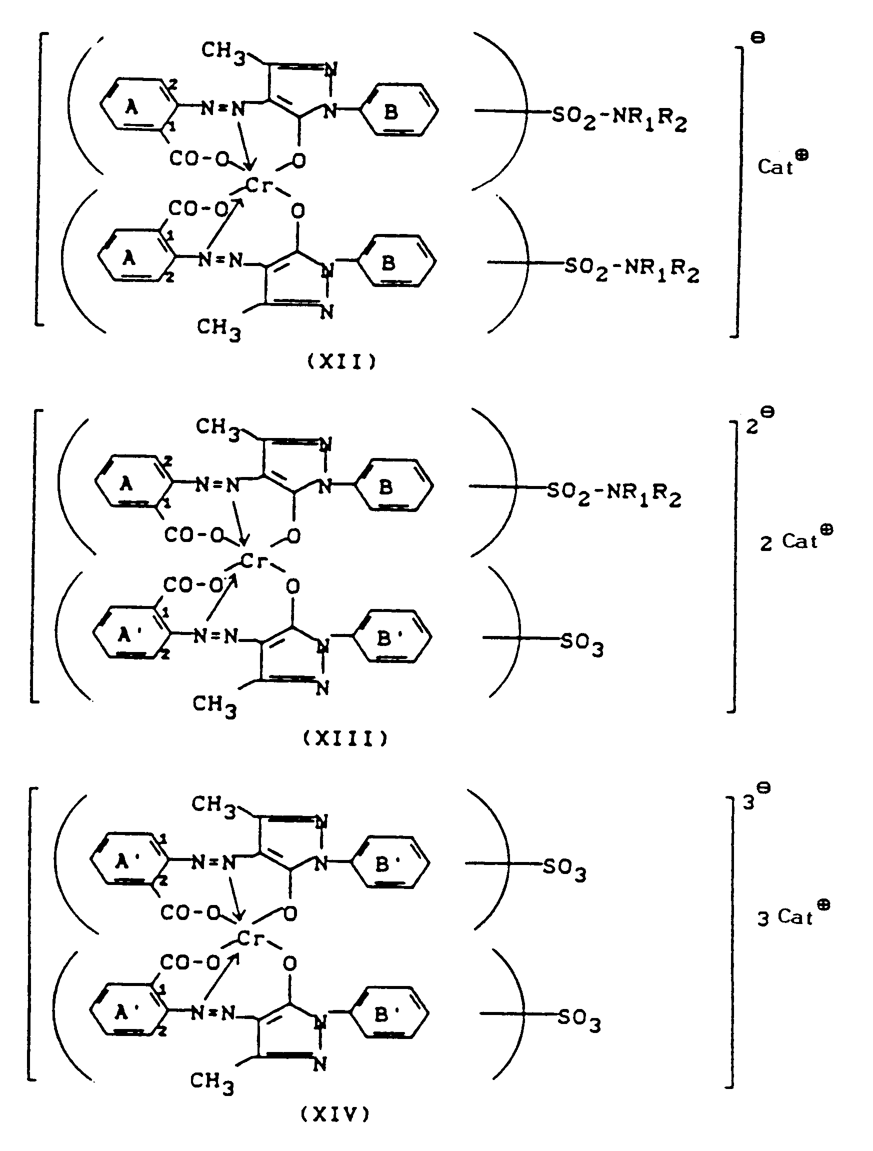 in which
ring A can be substituted in the 4 or 5 position by SO₂-NR₁R₂ or NO₂, in the 4 position by Cl and in the 4 and 6 position by Cl,
ring A' can be substituted in the 4 or 5 position by SO₃ or NO₂, in the 4 position by Cl and in the 4 and 6 position by Cl,
rings B can be substituted by SO₂-NR₁R₂ and additionally, independently of one another, once or twice by CH₃, Cl or OCH₃, and
ring B' can be substituted by SO₃ and additionally, independently of one another, once or twice by CH₃, Cl or OCH₃.

5. Process according to Claim 1, in which the primary colour red is a mixture of dyestuffs of the formulae (XV), (XVI) and (XVII): 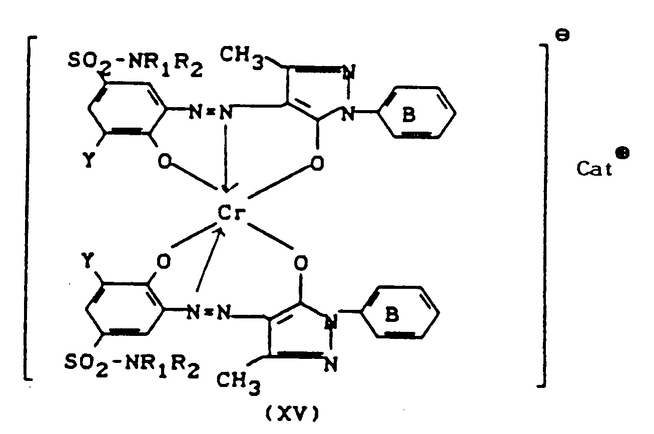 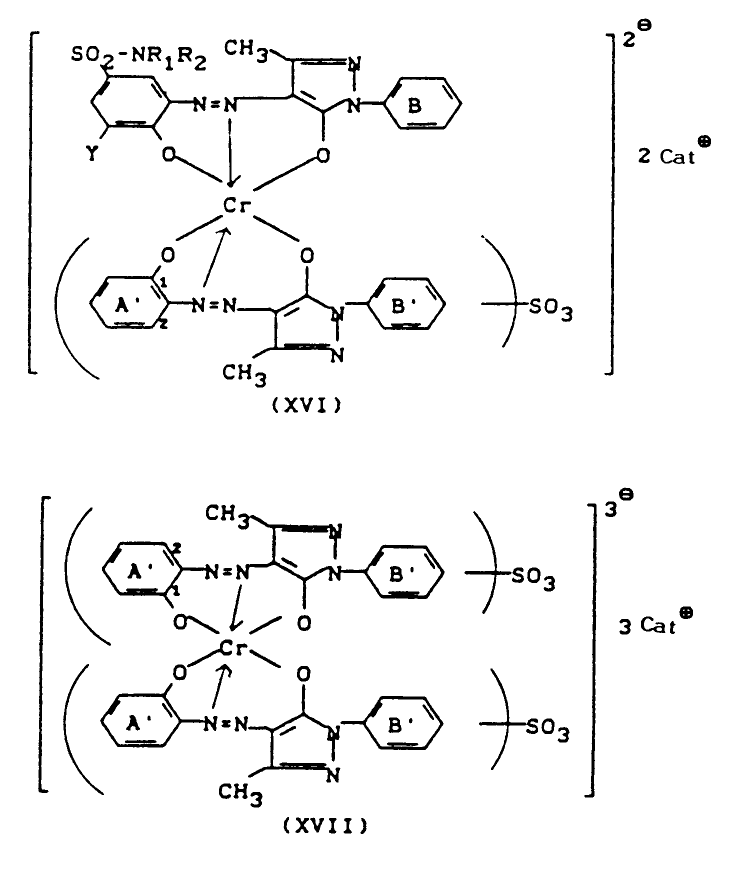 in which
Y represents NO₂ or Cl, and
ring A' can be substituted in the 4 position by Cl, in the 4 and 6 position by Cl, in the 4 position by Cl and 5 and 6 position by NO₂, in the 5 position by NO₂, in the 4 position by SO₃ and in the 6 position by Cl or NO₂ and in the 4 position by Cl and in the 6 position by SO₃,
rings B can, independently of one another, be mono- or disubstituted by CH₃, Cl or OCH₃, and
rings B' can be substituted by SO₃ and additionally, independently of one another, once or twice by CH₃, Cl or OCH₃.

6. Process according to Claim 1, in which the primary colour red is a mixture of dyestuffs of the formulae (XVIII), (XIX) and (XX): 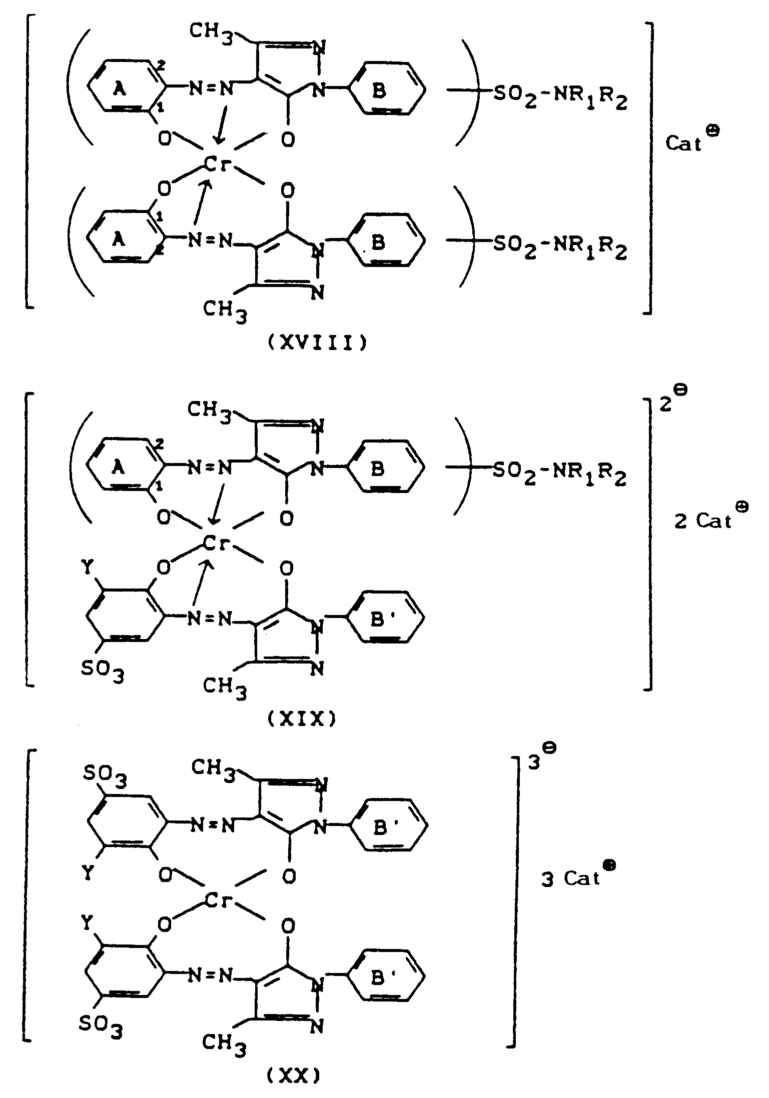 in which
Y represents NO₂ or Cl, and
ring A can be substituted in the 5 position by SO₂-NR₁R₂ or NO₂, in the 4 position by Cl, in the 4 and 6 position by Cl and in the 4 position by Cl and the 5 or 6 position by NO₂,
rings B can be substituted by SO₂-NR₁R₂ and additionally, independently of one another, once or twice by CH₃, Cl or OCH₃, and
rings B' can, independently of one another, be mono- or disubstituted by CH₃, Cl or OCH₃.

7. Process according to Claim 1, in which the primary colour blue is a mixture of dyestuffs of the formulae (XXI), (XXII) and (XXIII): 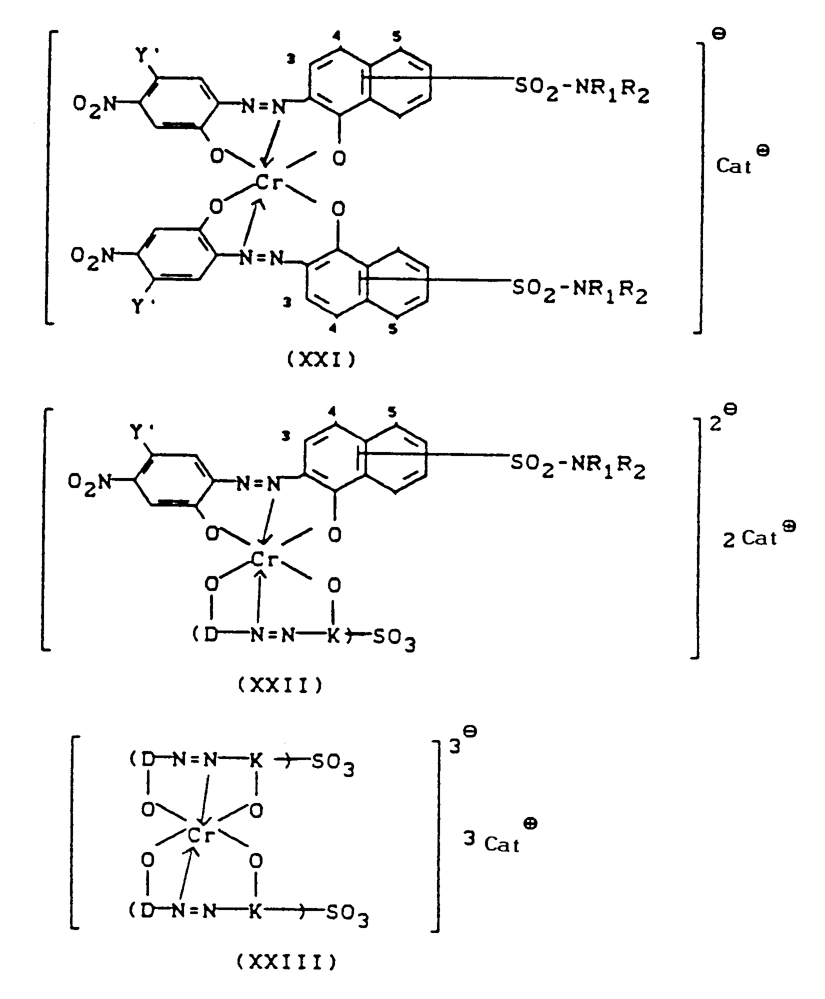 in which
SO₂-NR₁R₂ is in the position 3, 4 or 5,
Y' denotes H or Cl, and
D is the radical of 1-amino-2-naphthol-4-sulphonic acid, 6-nitro-1-amino-2-naphthol-4-sulphonic acid, 6-nitro-2-amino-1-hydroxybenzene-4-sulphonic acid, 4-chloro-2-amino-1-hydroxybenzene-6-sulphonic acid or of 4-chloro-, 4,6-dichloro-, 4-chloro-6-nitro-, 4-chloro-5-nitro- or 5-nitro-2-amino-1-hydroxybenzene, 2-amino-1-hydroxybenzene-5-sulphonamide or -5-dimethylsulphonamide, and
K is the radical of 1-naphthol, 4-methyl-1-naphthol, 5,8-dichloro-1-naphthol, 4'-hydroxynaphtho-(2',1':4,5)oxathiazole S-dioxide, 2-naphthol, 8-methylsulphonylamino-2-naphthol, 8-acetamino-2-naphthol, 6-phenylamino-1-naphthol-3-sulphonic acid, 6-(4-methoxyphenylamino)-1-naphthol-3-sulphonic acid, N-dimethyl-m-aminophenol or N-diethyl-m-aminophenol.

## Revendications

1. Procédé pour teindre le cuir à l'aide de mélanges d'au moins deux colorants à couleur fondamentale différente, caractérisé en ce que l'on utilise des mélanges de colorants dans lesquels chacune des couleurs de la combinaison est obtenue à l'aide d'un mélange de colorants de formules générales I, II et III 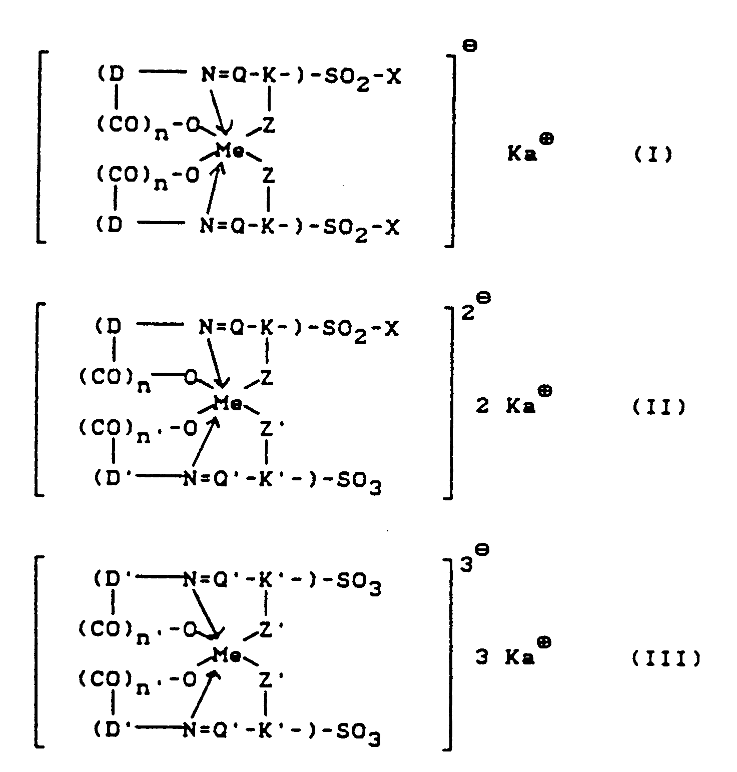 dans lesquelles
SO₂-X est relié aux radicaux D ou K et
SO₃ est relié aux radicaux D' ou K',
D, D' représentent le radical d'un composant diazotable de la série benzénique ou naphtalénique avec un groupe hydroxy ou carboxy en position ortho du groupe azo ou du groupe azométhine,
Q, Q' représentent l'azote ou CH,
K, K' lorsque Q représente l'azote, représentent le radical d'un copulant carbocyclique ou hétérocyclique , le groupe Z fixant les métaux étant en position ortho du groupe azo, ou bien, lorsque Q représente le groupe CH, le radical d'un o-hydroxyaldéhyde,
Z, Z' représentent l'oxygène, NH ou N-alkyle et
n, n' sont égaux à 0 ou 1,
X représente NH₂, NH₂ mono- ou di-substitué par des groupes alkyle, cycloalkyle, aralkyle ou aryle, un groupe aryloxy ou alkyle,
Me représente le chrome ou le cobalt et
Ka^{⊕} représente un cation et
les symboles D, D', K, K' et Z et Z' peuvent avoir des significations identiques ou différentes.

2. Procédé selon la revendication 1, dans lequel les colorants de la combinaison consistent chacun en mélanges de colorants complexes métalliques 1:2, de nuances étroitement voisines, de formules IV, V et VI 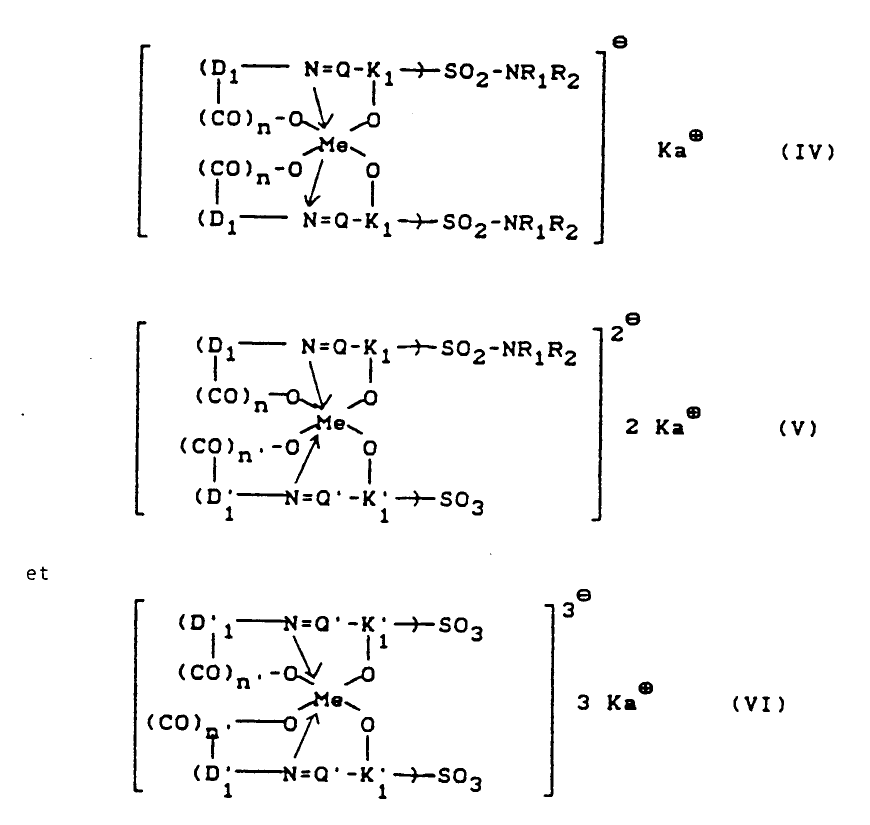 dans lesquelles
R₁ représente H ou un groupe alkyle,
R₂ représente H, un groupe alkyle ou aryle et
D₁, D'₁ représentent le radical d'un 2-amino-1-hydroxybenzène ou 1-amino-2-naphtol portant éventuellement un ou deux substituants indépendants, choisis parmi SO₃ ou SO₂-NR₁R₂, Cl, NO₂ et CH₃, ou d'un acide 2-aminobenzoïque éventuellement substitué par SO₃ ou SO₂-NR₁R₂, NO₂, Cl ou deux Cl et
K₁, K'₁, lorsque Q représente l'azote, représentent le radical du résorcinol, de la m-phénylène-diamine, du m-aminophénol, d'un m-aminophénol N-mono- ou dialkyl-substitué ou d'un copulant, éventuellement substitué par SO₃ ou SO₂-NR₁R₂, de la série du 1-naphtol, du 2-naphtol, de la 1-phényl-3-méthyl-5-pyrazolone ou de l'acétoacétylanilide, le groupe phényle des 1-phénylpyrazolones et des acétoacétylanilides pouvant porter un ou deux substituants indépendants, de préférence choisis parmi les groupes alkyle en C₁-C₄, alcoxy en C₁-C₄ et Cl,
ou bien, lorsque Q représente CH, le radical d'un 2-hydroxybenzaldéhyde ou d'un 2-hydroxybenzaldéhyde à substituant arylazo, le groupe aryle consistant de préférence en un groupe phényle éventuellement un ou deux substituants, indépendants choisis parmi SO₃ ou SO₂-NR₁R₂, Cl, NO₂, CH₃ ou OCH₃.

3. Procédé selon la revendication 1, dans lequel la couleur fondamentale jaune est obtenue à l'aide d'un mélange de colorants de formules IX, X et XI 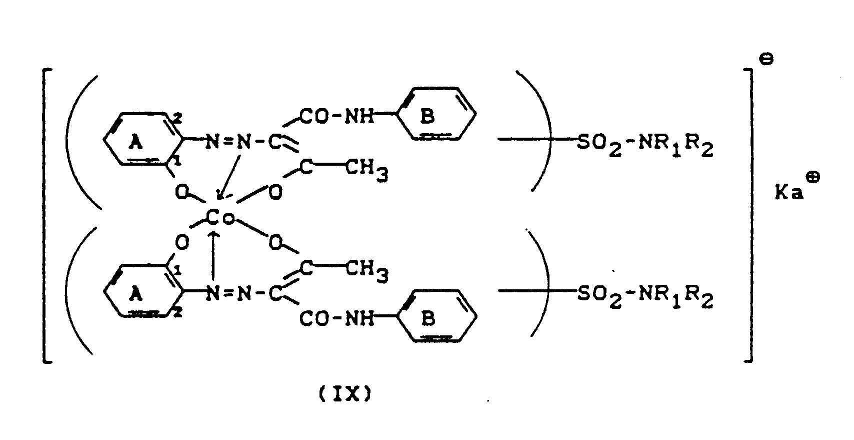 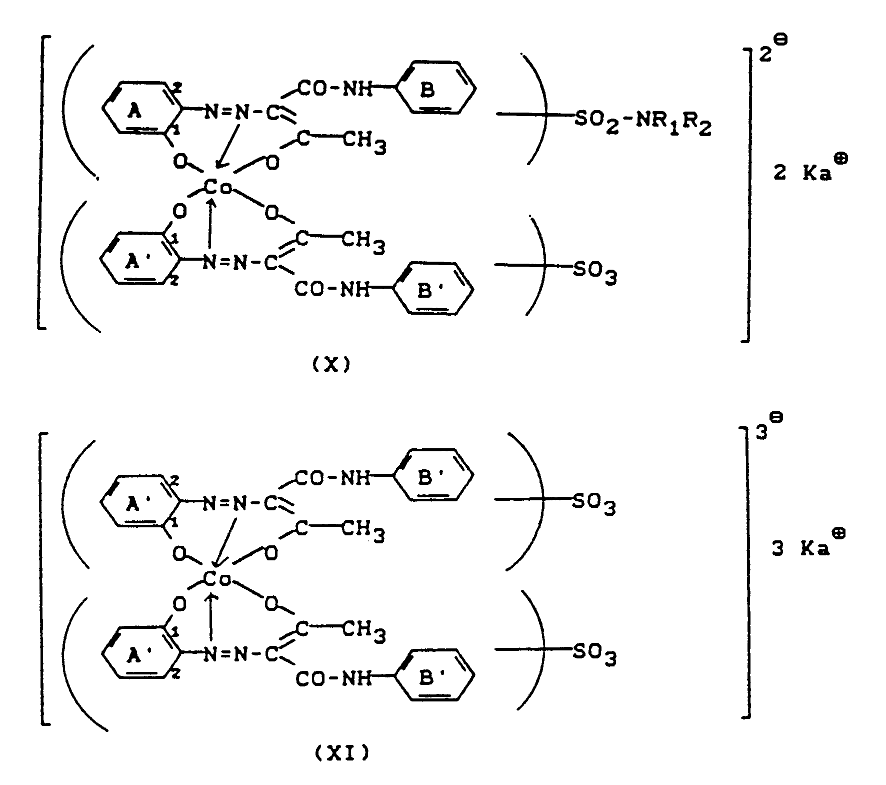 dans lesquelles
le cycle A peut être substitué en position 4 par SO₂-NR₁R₂, Cl ou NO₂ et en position 4 par NO₂ et en position 6 par Cl,
le cycle A' peut être substitué en position 4 par SO₃, Cl ou NO₂, en position 4 par NO₂ et en position 6 par Cl, en position 4 par NO₂ et en position 6 par SO₃ et en position 4 par SO₃ et en position 6 par Cl,
le cycle B peut être substitué une fois par SO₂-NR₁R₂ et, en outre une ou deux fois, indépendantes l'une de l'autre, par CH₃, Cl ou OCH₃ et
le cycle B' peut être substitué une fois par SO₃ et, en outre une ou deux fois, indépendantes l'une de l'autre, par CH₃, Cl ou OCH₃.

4. Procédé selon la revendication 1, dans lequel la couleur fondamentale jaune est obtenue à l'aide d'un mélange de colorants de formules XII, XIII et XIV 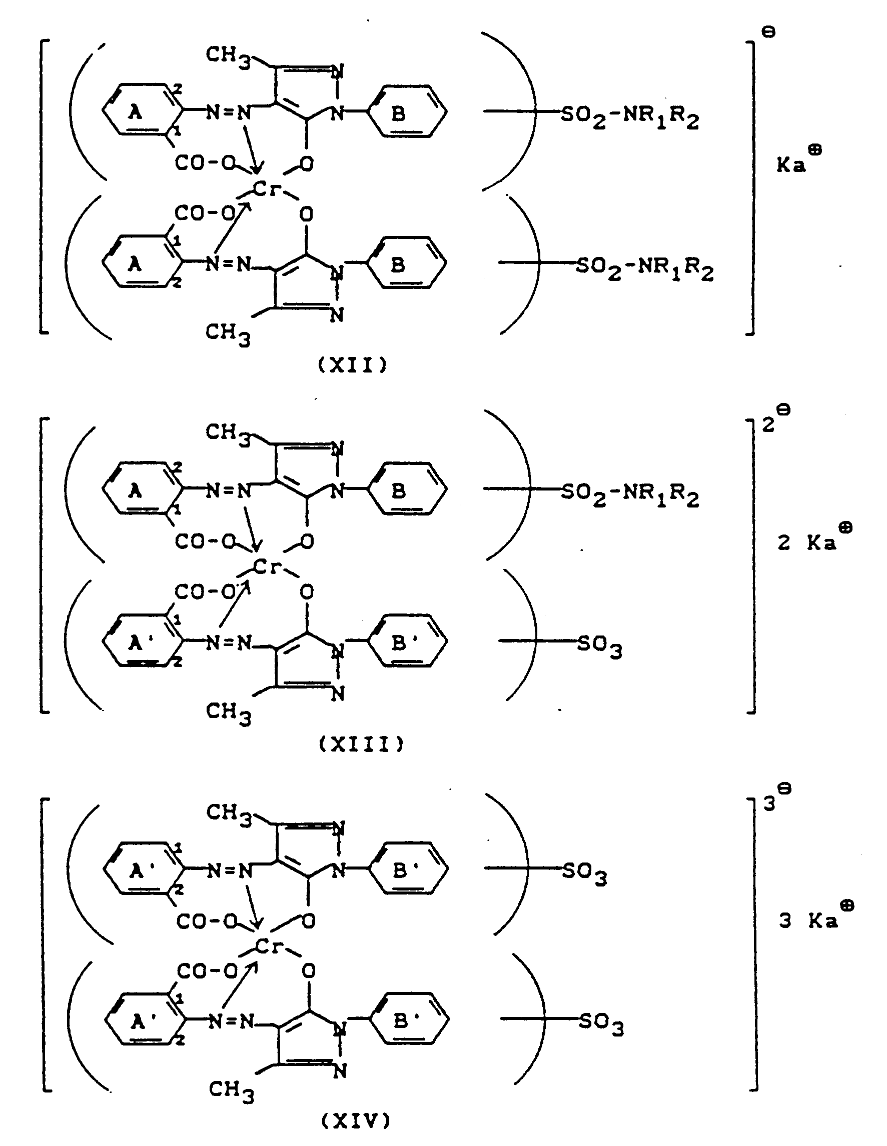 dans lesquelles
le cycle A peut être substitué en position 4 ou 5 par SO₂-NR₁R₂ ou NO₂, en position 4 par Cl et dans les positions 4 et 6 par Cl,
le cycle A' peut être substitué en position 4 ou 5 par SO₃ ou NO₂, en position 4 par Cl et dans les positions 4 et 6 par Cl,
le cycle B peut être substitué par SO₂-NR₁R₂ et, en outre, une ou deux fois, indépendantes l'une de l'autre, par CH₃, Cl ou OCH₃ et
le cycle B' peut être substitué par SO₃ et, en outre, une ou deux fois, indépendantes l'une de l'autre, par CH₃, Cl ou OCH₃.

5. Procédé selon la revendication 1, dans lequel la couleur fondamentale rouge est obtenue à l'aide d'un mélange de colorants de formules XV, XVI et XVII 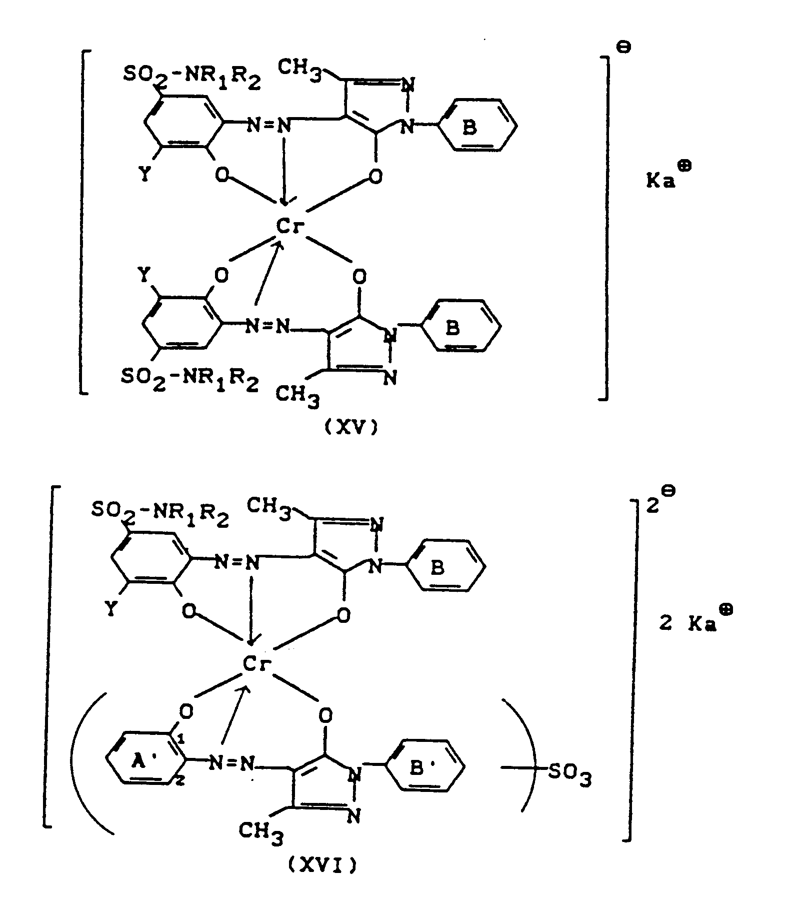 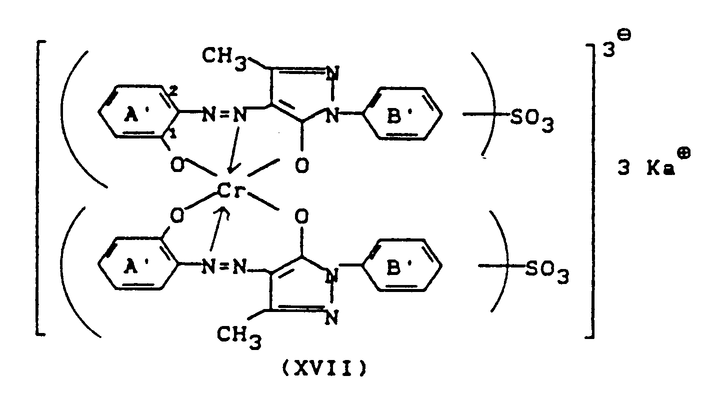 dans lesquelles
Y représente NO₂ ou Cl et
le cycle A' peut être substitué en position 4 par Cl, dans les positions 4 et 6 par Cl, en position 4 par Cl et dans la position 5 ou 6 par NO₂, en position 5 par NO₂, en position 4 par SO₃ et en position 6 par Cl ou NO₂ et en position 4 par Cl et en position 6 par SO₃,
le cycle B peut être substitué une ou deux fois, indépendantes l'une de l'autre, par CH₃, Cl ou OCH₃ et
le cycle B' peut être substitué par SO₃ et, en outre, une ou deux fois, indépendantes l'une de l'autre, par CH₃, Cl ou OCH₃.

6. Procédé selon la revendication 1, dans lequel la couleur fondamentale rouge est obtenue à l'aide d'un mélange de colorants de formules XVIII, XIX et XX 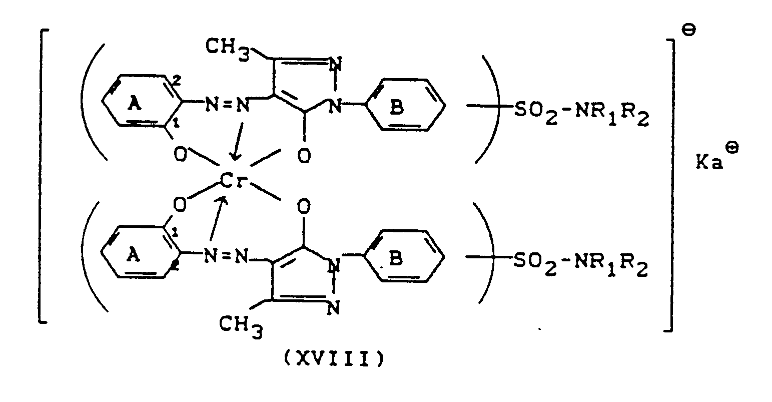 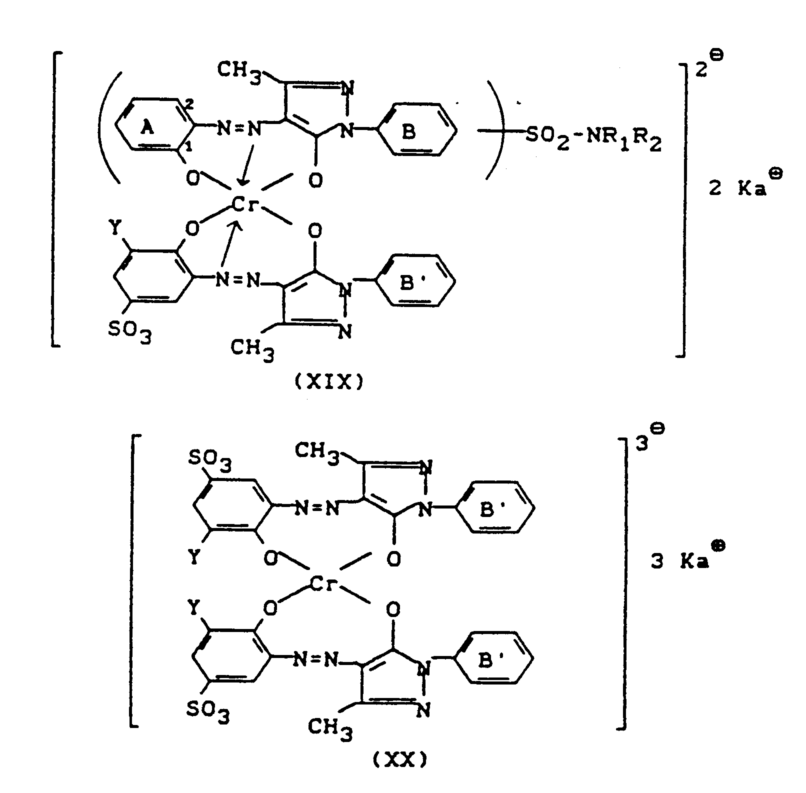 dans lesquelles
Y représente NO₂ ou Cl et
le cycle A peut être substitué en position 5 par SO₂-NR₁R₂ ou NO₂, en position 4 par Cl, dans les positions 4 et 6 par Cl et en position 4 par Cl et en position 5 et 6 par NO₂,
le cycle B peut être substitué par SO₂-NR₁R₂ et en outre, une ou deux fois, indépendantes l'une de l'autre, par CH₃, Cl ou OCH₃ et
le cycle B' peut être substitué une ou deux fois, indépendantes l'une de l'autre, par CH₃, Cl ou OCH₃.

7. Procédé selon la revendication 1, dans lequel la couleur fondamentale bleue est obtenue à l'aide d'un mélange de colorants de formules XXI, XXII et XXIII 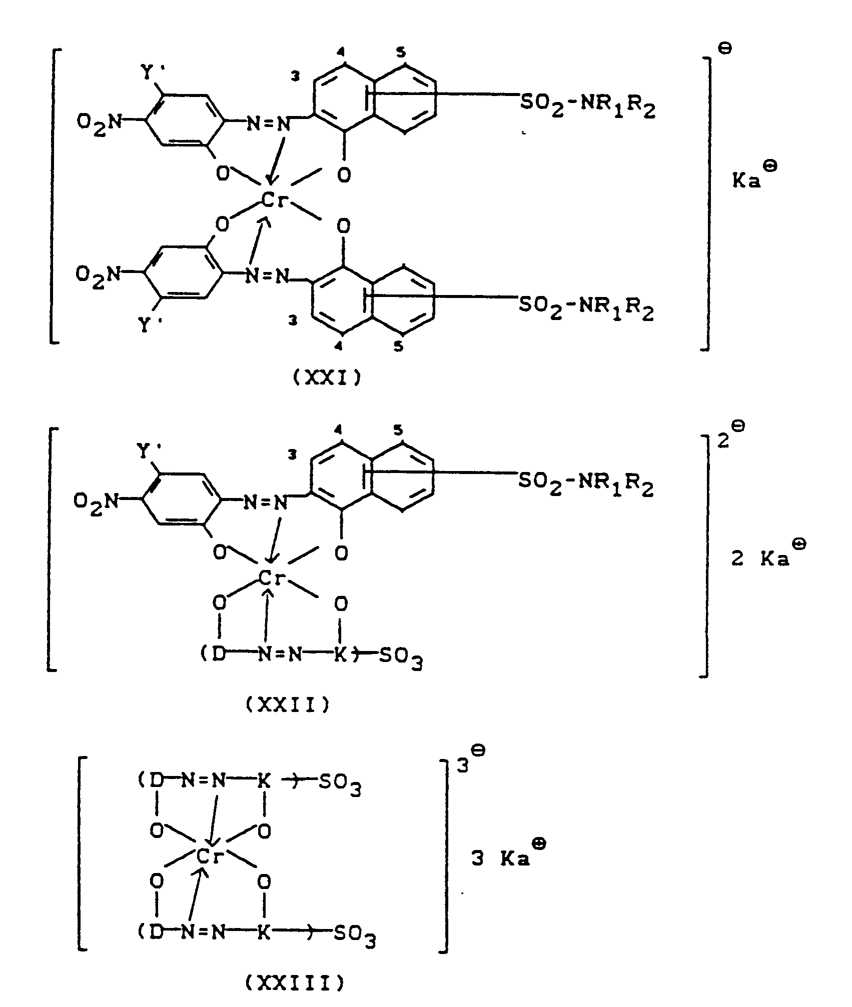 dans lesquelles
SO₂-NR₁R₂ est en position 3, 4 ou 5
Y' représente H ou Cl et
D est le radical de l'acide 1-amino-2-naphtol-4-sulfonique, de l'acide 6-nitro-1-amino-2-naphtol-4-sulfonique, de l'acide 6-nitro-2-amino-1-hydroxybenzène-4-sulfonique, de l'acide 4-chloro-2-amino-1-hydroxybenzène-6-sulfonique ou du 4-chloro-, du 4,6-dichloro-, du 4-chloro-6-nitro-, du 4-chloro-5-nitro- ou du 5-nitro-2-amino-1-hydroxy-benzène, du 2-amino-1-hydroxybenzène-5-sulfonamide ou -5-diméthylsulfonamide et
K est le radical du 1-naphtol, du 4-méthyl-1-napthol, du 5,8-dichloro-1-naphtol, du 4'-hydroxynaphto-(2',1':4,5)-oxathiazole-S-dioxyde, du 2-naphtol, du 8-méthylsulfonylamino-2-naphtol, du 8-acétamino-2-naphtol, de l'acide 6-phénylamino-1-naphtol-3-sulfonique, de l'acide 6-(4-méthoxyphénylamino)-1-naphtol-3-sulfonique, du N-diméthyl-m-amino-phénol ou du N-diéthyl-m-aminophénol.
